# EUROPEAN PATENT APPLICATION

(11) **EP 4 697 104 A1**
(43) Date of publication of application: **18.02.2026**
(21) Application number: 24194185.5
(22) Date of filing: 12.08.2024
(51) Int. Cl.: G05B 17/02, G05B 19/4065, G05B 19/4069

(54) **GENERATING A LOCAL TOOL UTILIZATION FUNCTION**

(71) Applicant: Makino Milling Machine Co., Ltd., Tokyo 152-8578 (JP)
(72) Inventor: Augspurger, Thorsten, 4730 Raeren (BE); Bangert, Marco, 52074 Aachen (DE)
(74) Representative: Mooser, Sebastian Thomas

(57) **Abstract**

A computer-implemented method (100) for generating a local tool utilization function, comprising:
- obtaining (102) a spatial work model (70A-C) and a spatial tool model (72), wherein the spatial tool model comprises a spatial representation of an outer boundary of a tool;
- obtaining (104) a tool trajectory (T1-T3) defining a trajectory of the spatial tool model relative to the spatial work model;
- registering (106) the spatial work model, spatial tool model, and the tool trajectory to the same coordinate system;
- partitioning (108) the spatial tool model into a plurality of slices (S1-S6) so that the spatial representation of the outer boundary of the spatial tool model is partitioned along a longitudinal direction (L) of the spatial tool model;
- simulating (110) an engagement area (49A-C) of the spatial tool model with the spatial work model for at least one step of the tool trajectory; and
- updating (112) a data structure (234) comprising a local tool utilization function (235) characterizing the outer boundary of the spatial tool model for the at least one step of the tool trajectory;
wherein the local tool utilization function characterizes, for one or more slices (S1-S6) of the outer boundary of the spatial representation of the tool, at least one accumulated metric (235) computed and/or measured based on the engagement area of the spatial tool model with the spatial work model during the at least one step of the tool trajectory.

## Description

### Technical Field

The present disclosure generally relates to computer-implemented method for generating a local tool utilization function, and an associated method for providing a tool utilization prediction, apparatus, system, and computer program element.

### Background

A principal cost associated with machining is the cost of tool replacement due to wear. Although modern tools are made from advanced hard cutting materials, the use of the tools in machining operations quickly causes cutting edges of the tools to break out or lose their sharpness. Using worn tools in a machining process causes inaccurate manufacturing and quality problems in finished machined items. Typically, worn tools are replaced before quality problems are observed, but this leads to a significant increase in the cost of tools for machining, since tools are not efficiently used. To an extent, the measurement of tool wear by automatic visual inspection and/or automatic laser inspection enables the tracking of tool wear. At present, only integral metrics from measurements can be considered for tracking or predicting tool wear (typically time, traversed path, or number of workpieces).

Approaches for addressing tool wear in a manufacturing environment can be further improved.

### Summary

According to a first aspect, there is provided a computer-implemented method for generating a local tool utilization function. The method comprises:
- obtaining a spatial work model and a spatial tool model, wherein the spatial tool model comprises a spatial representation of a rotational-symmetric outer boundary of a tool;
- obtaining a tool trajectory and its orientation defining a trajectory of the spatial tool model relative to the spatial work model;
- registering the spatial work model, spatial tool model, and the tool trajectory to the same coordinate system;
- partitioning the spatial tool model into a plurality of slices (disc-like elements) so that the spatial representation of the outer boundary of the spatial tool model is partitioned along a longitudinal direction of the spatial tool model;
- simulating an engagement of the spatial tool model with the spatial work model for at least one step of the tool trajectory; and
- updating a data structure comprising a local tool utilization function characterizing the outer boundary of the spatial tool model for the at least one step of the tool trajectory,
wherein the local tool utilization function characterizes, for one or more slices of the outer boundary of the spatial representation of the tool, at least one accumulated metric computed and/or measured based on an engagement area of the spatial tool model with the spatial work model during the at least one step of the tool trajectory.

Beneficially, a local tool utilization function according to the first aspect enables an accurate metric to be generated during use of the tool that closely characterises the local load on the tool during use. Because tool load during manufacturing is closely related to tool wear, the local tool utilization function can track homogenous or inhomogeneous use of a given tool, owing to the tracking of which slices of the tool engage with the work at each time step of the execution of the trajectory.

In some examples, future use of a unique tool associated with a local tool utilization function can be planned using the local tool utilization function so that the future use of the unique tool engages with a work item along lateral portions of the tool that are less likely to have been subject to excessive wear. Instead of removing a tool from circulation prematurely owing to inhomogeneous wear, the tool can remain in circulation for longer and still perform useful machining operation provided tool trajectory planning software can plan to use the inhomogeneous tool appropriately. Therefore, the local tool utilization function can also be used as an input to manufacturing trajectory planning software.

The local tool utilization function according to the first aspect enables an assessment to be made as to whether or not a planned (simulated) tool trajectory would lead to a condition where the distal end of the tool contacts the work or how often this condition occurs. This is referred to as a "zero cutting velocity condition", and ideally a planned tool trajectory avoids the "zero cutting velocity condition" to maintain favourable cutting conditions and prevent damage to the tip of the tool and the work item.

A machine monitoring system with access to a local tool utilization function related to a tool according to aspects of this specification allows an improvement in tool monitoring. For example, a simulated reference distribution (for example, of an engagement value, such as the chip volume per slice) allows the value of measurements to be distributed to individual slices of a tool, which is an improvement over the current integral measurement approach, which assigns the entire measurement value to the entire tool at one timestamp. Thus, by the tool monitoring system an integral measurement at each timestamp in the process is distributed to the slices which are actually in engagement at this timestamps and is distributed by a key given by another engagement value (e.g. the chip thickness distribution) at this timestamp. Thus, by the tool monitoring system an integral measurement at each timestamp in the process is distributed to the slices which are actually in engagement at the respective timestamp and is distributed by a key given by another engagement value (e.g. the chip thickness distribution) at this timestamp. This may improve the accuracy of wear tracking and prediction in low batch, or single batch production.

Another benefit of computing a local tool utilization function is a reduction of manual tool inspection or reassembly times. For example, a large insert cutter is conventionally inspected manually by removal and inspection of the individual inserts. The local tool utilization function according to aspects of the present specification may facilitate such manual inspections because the local tool utilization function can be used to provide an instruction to measure and to reassemble only a subset, or one, tool insert out of all of the tool inserts. For example, an insert that has experienced peak load may be prioritised for inspection and replacement.

In other words, providing a local tool utilization function by simulation improves on the use of integral metrics (like usage time). Integral metrics quantify wear as a whole for the entire tool, and do not distinguish between local areas with high wear progress and areas with relatively low wear progress along the tools cutting edge.

According to a second aspect, there is provided a method for training a machine learning model. The method comprises:
- obtaining a plurality of data structures each comprising a local tool utilization function as computed according the first aspect;
- obtaining one or more process conditions corresponding to the local tool utilization functions, wherein the process conditions are measured and/or simulated;
- training a machine learning model to predict a tool utilization output of at least one tool using the plurality of data structures and one or more process conditions.

When a machine learning model is trained using data incorporating a local tool utilization function as provided in the first aspect, the resulting machine learning model is capable of providing a more accurate and localised wear prediction of at least one tool, on the basis of simulated or measured localized load. Measured loads and measured tool wear that is slice-localised can be combined for model training. Furthermore, this advances over the present approach of combining only one integral load per tool with one measured maximal load metric per tool.

According to a third aspect, there is provided a method for providing a tool utilization prediction, comprising:
- obtaining a machine learning model trained according to the second aspect;
- generating a further local tool utilization function based on a simulation of a prospective machining operation, or by executing a machining operation wherein the further tool utilization function is generated according to the method of the first aspect;
- obtaining one or more process conditions associated with the simulated or executed machining operation; and
- providing the further local tool utilization function and the one or more process conditions as inputs to the machine learning model, to thus obtain a tool utilization output.

By training a machine learning model on local tool utilization functions computed according to the first aspect, significant improvement estimates for local tool wear is possible with access to appropriate process conditions and a further local tool utilization function defining the intended or actual use of a machine tool.

According to a fourth aspect, there is provided an apparatus, comprising:
- a communications interface;
- at least one processor; and
- a memory;
wherein the at least one processor is configured to perform the method according to the first, second, or third aspects.

According to a fifth aspect, there is provided a system comprising:
- the apparatus according to the fourth aspect;
- a numerical controller; and
- a machining center communicably coupled to the numerical controller;

wherein the numerical controller is configured to cause the machining center to perform at least one machining operation on work associated with a spatial work model using a machining tool associated with the tool model according to a tool trajectory provided by the apparatus; and
wherein the machining center and/or numerical controller are configured to obtain feedback information during the at least one machining operation, and to provide the feedback information to the apparatus.

According to a seventh aspect, there is provided a computer program element comprising machine readable instructions which, when executed by a computer, cause the computer to perform the computer implemented method of the first, second, third, or fourth aspects.

According to an eighth aspect, there is provided a computer readable medium comprising the computer program element of the seventh aspect.

### Brief Description of the Drawings

Further details, advantages and aspects of the present disclosure will become apparent from the following embodiments taken in conjunction with the drawings, wherein:
- Fig. 1: schematically illustrates an exemplary machining center using a cut-through view in the Y-Z plane.
- Fig. 2: schematically illustrates a tool using a cut-through view in the X-Z plane.
- Fig. 3: schematically illustrates a method according to the first aspect.
- Figs. 4A - 4C: schematically illustrate stages of an engagement simulation.
- Fig. 4D: schematically illustrates activated slices related to a spatial tool model resulting from an engagement simulation.
- Fig. 4E: schematically illustrates an example of a local tool utilization function.
- Figs. 5A-5E: schematically illustrate various approaches to processing a local tool utilization function.
- Figs. 6A-6B: schematically illustrate contact slices of a ball end mill.
- Figs. 6C-6D: schematically illustrate examples of non-homogeneous local tool utilization function.
- Figs. 6E-6F: schematically illustrate examples of nonhomogeneous local tool utilization function.
- Fig. 7: schematically illustrates examples of local tool utilization function.
- Fig. 8: schematically illustrates an example of a machine learning approach.
- Fig. 9: schematically illustrates machine learning methods.
- Fig. 10: schematically illustrates an apparatus according to the fourth aspect.
- Fig. 11: schematically illustrates an example of a manufacturing facility including the system according to the fifth aspect.

### Detailed Description

In the following description, exemplary embodiments will be explained with reference to the drawings. The same reference numerals will be used to denote the same or similar structural features.

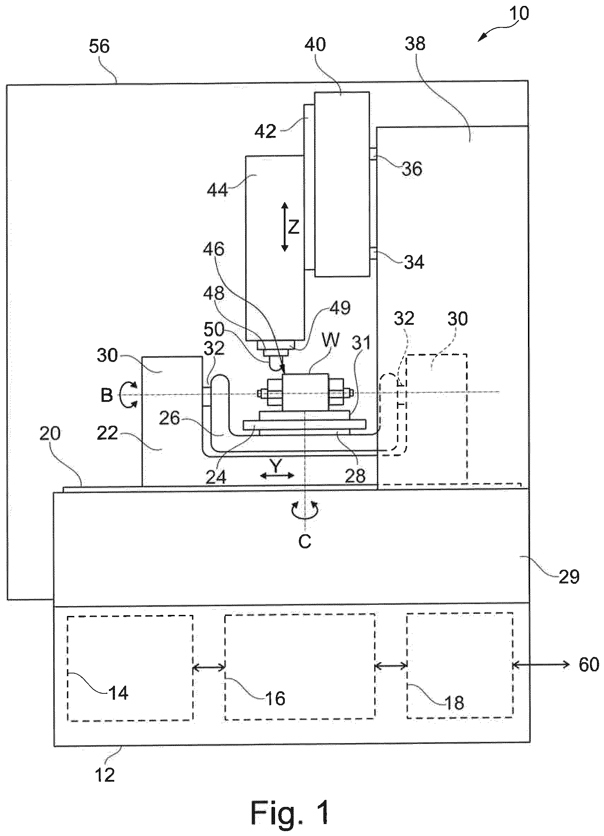

Fig. 1 schematically illustrates an exemplary machining center 10.

The machining center 10 of Fig. 1 is a vertical machining center, however this is an example and the present specification applies to obtaining a local tool utilization function for tools used in a variety of machines, such as grinders, cutters, or center lathes. The machining center 10 of Fig. 1 is a five-axis machining center 10. The orientation of a tool relative to an item of work 46 may be varied by five degrees of freedom. This means that a tool 50 held in the machining center 10 can be applied to the work 46 in a variety of homogeneous and inhomogeneous conditions as determined by trajectory planning software of a CAM/CAM design suite.

In particular, the illustrated machining center 10 comprises a rotational B-axis, a rotational C axis, a perpendicular X-axis, a perpendicular Y-axis, and a perpendicular Z-axis as drive axes. The direction of the axes are illustrated using corresponding labelled arrows in Fig.1 with the exception of the perpendicular X-axis, whose direction of motion is effectively into or out of the plane of the drawing.

Base 29 supports the remaining structure of the machining center 10. A rail bed 20 enables a movable carriage 22 to be moved along the perpendicular Y axis by a servomotor (not illustrated). The movable carriage 22 comprises a pair of columns 30. A shaft 32 defining the rotary B-axis is anchored in the two columns of the movable carriage 22. The shaft 32 is configured to enable a tiltable support member 26 to tilt around a sector of the rotary B-axis.

A servomotor (not illustrated) drives the shaft 32 and/or the tiltable support member 26 enabling accurate positioning of the tiltable support member 26 at an angle of the rotary B-axis. Typically, it is not possible for the tiltable support member 26 to tilt completely around the rotary B-axis because the tiltable support member 26 would then interfere with a spindle assembly. The tiltable support member 26 supports a rotary table 24 via a rotatable shaft 28 configured to rotate freely around the rotary C-axis. The rotatable shaft 28 is driven by a further servomotor (not illustrated). The rotary table 24 comprises a pallet 31 and a workpiece mount W.

The machining center 10 further comprises a vertical column 38 configured to hold a spindle mount 40. The spindle mount 40 supports a spindle head 44 on the vertical column 38. The spindle mount 40 is supported by the vertical column 38 via one or more X-axis motion members 36, 34 enabling motion of the spindle mount 40 and its supported members in the direction of the X-axis (in the view of Fig. 1, this direction is perpendicularly into, or out of, the page). The spindle head 44 is mounted to the spindle mount 40 via one or more Z-axis motion members 42. The X-axis motion members 34, 36 and the one or more Z-axis motion members 42 may comprise, for example, ball screws driven by corresponding servomotors.

The spindle head 44 comprises a spindle drive (not illustrated) that is mechanically coupled to spindle 49. Spindle 49 comprises, at its distal end, a tool holder 48. The tool holder 48 is capable of holding a wide range of machining tools 50 such as an end mill cutter, a ball end mill, a slitting saw, a slab mill, a face mill, a thread mill, a fly cutter, an external radius cutter, and the like. Fig. 1 illustrates a ball end mill. For safety and hygiene reasons, the machining center 10 is covered by a cover 56.

The vertical machining center 10 further comprises a numerical controller 12 configured to control and monitor the vertical machining center 10. The numerical controller 12 comprises a motor drive 14 configured to receive drive signals from a processor 16. The processor 16 is configured to receive manufacturing commands from a CAD/CAM system connected to the vertical machining center 10 by a factory communication network 60. The processor 16 is configured to convert the manufacturing commands into a sequence of drive signals. The sequence of drive signals moves the servomotors and/or other drive actuators of the vertical machining center 10 so that an item of work 46 can be moved relative to the tool 50 held at the distal end of the spindle. In particular, the sequence of drive signals causes the tool 50 to trace a trajectory in space relative to the item of work 46, and thus to remove material from the work 46 in accordance with a CAD/CAM machining plan provided automatically, manually, or semi-automatically as part of a CAD/CAM planning process.

The numerical controller 12 further comprises a measurement unit 18. The vertical machining center 10 is equipped with a plurality of sensors (not shown) capable of monitoring the status of the vertical machining center 10 before, during, and after a machining operation. The vertical machining center 10 may comprise, for example, a spindle current sensor, a spindle load sensor, a spindle torque sensor, a process force sensor, a tool bending moment or torsion sensor, an X servo torque sensor, a Y servo torque sensor, an Z servo torque sensor, a B axis servo torque sensor, a C axis servo torque sensor, a vibration sensor, a noise sensor (microphone), an engagement time sensor, a sensor for detecting the tool center point path length, a sensor for detecting an event (such as a tool entry or exit conditions), and/or energy consumption of the machining center 10. The numerical controller 12 may communicate such measurements in real-time, or in a sampled manner, to further data-processing apparatuses via the communication network 60. Alternatively, numerical controller 12 may time-stamp the measurements and communicate those measurements to a computing device at a later time, such as the completion of machining operation, for example.

In use, the vertical machining center 10 is configured to receive and/or generate a sequence of drive signals typically originating from a CAD/CAM manufacturing program hosted in another computer connected to the communication network 60. An appropriate tool 50 for a portion, or all, of the machining trajectory is automatically obtained by the spindle head 44 from a robotic tool cassette (not illustrated), for example. Therefore, it is possible to machine the workpiece 46 into an arbitrary 3D form according to a CAD/CAM generated machining plan. Although the foregoing explanation has been in terms of a vertical machining center 10, a skilled person will appreciate that similar provision can be appropriately provided for a wide range of computer automated machine tools such as grinders, cutters, or center lathes.

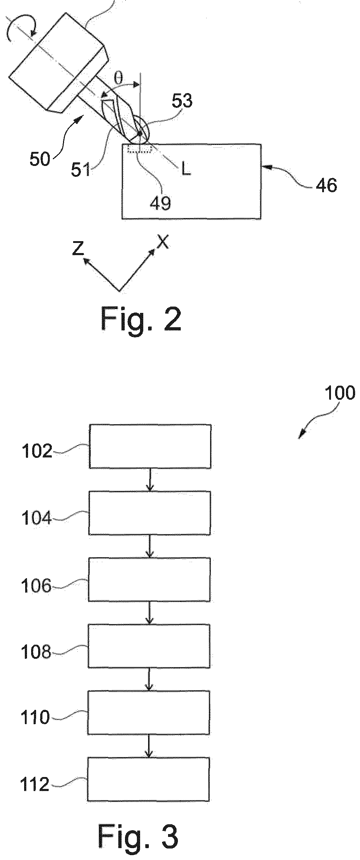

Fig. 2 schematically illustrates a machine tool.

In particular, the tool 50 is illustrated as attached to the tool holder 48 of a vertical machining center 10. Illustrated tool 50 is a ball cutter having cutting tips with a hemispherical outer boundary 53 at the distal end of the tool. The ball cutter comprises a plurality of helical ridges conforming to the hemispherical outer boundary 53 at the distal end of the tool. The tool 50 comprises a cutting edge 51 corresponding to the outer boundary 53. Dependent on the settings of the five axes of the vertical machining center 10 of Fig. 1, the ball cutter can be brought into contact with the work 46 at an engagement area 49 of the work 46. At the time instant when the ball cutter touches the work 46, the engagement area 49 can be modelled as a point of arbitrarily small size. At the ball cutter is driven into the work 46, chips of the work 46 (typically metal chips) are removed for each incremental advance of the tool trajectory.

In the case of a ball cutter entering the work from a vertical direction, the engagement area can be modelled, for each advance of the tool trajectory, as a hemispherical surface of increasing diameter. A skilled person will appreciate that the dimensions of a wide range of tool types can be measured and/or computed in advance, and thus the engagement area 49 of a tool 50 can be computed provided the position of the tool 50, and work 46 are registered.

An approach of the tool 50 to the work can be performed perpendicularly to the work 46 (for example in the case of drilling a hole). Such approaches are typically avoided, because the perpendicular contact of the tip of the ball cutter with the work 46 results in a zero cutting velocity condition between the tip of the ball cutter and the work 46. The presence of a zero cutting velocity condition can result in poor quality machining and damage to the ball cutter. Exemplary techniques in the present specification allow the detection of zero cutting velocity condition so that machine trajectories can be adjusted to avoid such zero cutting velocity conditions.

Accordingly, a ball cutter is typically moved relative to the work 46 in an angled trajectory (the longitudinal axis L of the ball cutter in Fig. 2 is angled θ degrees from a construction line that is perpendicular to the work 46, for example. This would result in a non-homogeneous wear condition on the ball cutter. If tool 50 is subject to a non-homogeneous load or wear condition, some parts of the tool may become too worn for reliable machining and the tool has to be withdrawn from use, even though some parts of the tool 50 may still be usable. Exemplary techniques in the present specification enable non-homogeneous load or wear conditions to be identified as they accumulate during use of a tool 50.

In the case of other types of tool, such as a barrel tool, the non-homogeneous load is identified, and the orientation of tool 50 is adapted to homogenize the load along the outer boundary of the machining surface of the tool 50.

Tool wear monitoring is of interest, but is presently based on integral metrics measured by a machining center, for example. This approach may cause a situation, where a tool is utilized very efficiently along the entire cutting edge causing well distributed low tool wear, but still the tool is exchanged due to reaching its usage time limit as calculated by only the integral metrics (one example is total usage time). Thus, unnecessary tool replacement costs occur. In the opposite case a tool is used in a specific process very locally at one position and is worn down rapidly at that location, but still the usage time limit (as an integral metric) is not reached. In this case quality issues and other risks to the manufacturing system may occur.

Fig. 3 schematically illustrates a method according to the first aspect.

According to a first aspect, there is provided a computer-implemented method 100 for generating a local tool utilization function. The method comprises:
- obtaining 102 a spatial work model 70A-C and a spatial tool model 72, wherein the spatial tool model 72 comprises a spatial representation of an outer boundary of a tool;
- obtaining 104 a tool trajectory T1-T3 defining a trajectory of the spatial tool model 72 relative to the spatial work model 70A-C;
- registering 106 the spatial work model 70A-C, spatial tool model 72, and the tool trajectory T1-T3 to the same coordinate system;
- partitioning 108 the spatial tool model 72 into a plurality of slices S1-S6 so that spatial representation of the outer boundary of the spatial tool model 72 is partitioned along a longitudinal direction of the spatial tool model 72;
- simulating 110 an engagement of the spatial tool model 72 with the spatial work model 70A-C for at least one step of the tool trajectory T1-T3; and
- updating 112 a data structure 235 comprising a local tool utilization function 235 characterizing the outer boundary of the spatial tool model 72 for the at least one step of the tool trajectory T1-T3,
wherein the local tool utilization function 235 characterizes, for one or more slices S1-S6 of the outer boundary of the spatial representation of the tool, at least one accumulated metric 235 computed and/or measured based on the engagement area 49A-C of the spatial tool model 72 with the spatial work model 70A-C during the at least one step of the tool trajectory T1-T3.

A local tool utilization function generated by the method according to the first aspect characterises the use, or prospective use, of a tool 50 throughout all machining trajectories to which the tool 50 is, or is to be, applied. The exact methods of characterisation may, for example, be based on the lifetime load of the tool 50, or on proxies for wear of the tool. The characterisation may be made by accumulating metrics based on one or more measured and/or simulated machining properties computed for each stage of a machining trajectory T. In an example where the local tool utilization function is generated entirely by simulation, engagement of a simulated tool with a simulated workpiece along a simulated trajectory is computed, optionally combined with simulated machine metrics. In this case, the local tool utilization function is an estimate of the load or wear consequences on a tool that will occur if a given tool trajectory is applied. In another example, the local tool utilization function is computed by executing a tool trajectory on real work using a machining center. In this case, a simulation is still required to compute the engagement of a real tool with a real workpiece along a real trajectory. In this case, the local tool utilization function is a historical measure characterizing the wear or load of a tool up to the present. Measured or simulated metrics can optionally be combined with the local tool utilization function obtained during a real machining operation, to improve the accuracy of the local tool utilization function.

In general, a virtual model or digital twin of a tool 50 is represented in a simulation environment modelling a three-dimensional space by a spatial tool model 72. The spatial tool model is, for example, a three-dimensional solid model of, without limitation, a range of tools 50 such as an end mill cutter, a ball end mill, a slitting saw, a slab mill, a face mill, a thread mill, a fly cutter, an external radius cutter, and the like. The spatial tool model enables the position of a range of points of an outer boundary of the tool 50 to be modelled in software. In another example, Boolean operations are applied to the spatial work model 70 and the spatial tool model 72 to compute the outer boundary of the tool 50 and/or the engagement area 49A-C.

According to one embodiment of the method according to the first aspect, the local tool utilization function is generated only by simulation, wherein the accumulated engagement characteristics of the spatial tool model 72 and the spatial work model 70 along the trajectory T1-T3 are simulated to enable a modelling of tool inhomogeneity. According to another embodiment of the method according to the first aspect, the local tool utilization function is generated as a hybrid of parallel simulated and measured quantities. For example, the simulation defines portions of the outer boundary of the tool that contact the engagement area of the work 46. Measured quantities from a real machining operation may be accumulated, for example, based on which portions of the outer boundary of the tool contact the engagement area of the work 46. Another quantity associated with the interaction of the spatial tool model 72 with the spatial work model 70 is the engagement angle 103 between the spatial tool model 72 and the spatial work model 70 per slice of tool.

The spatial work model 70 is also comprised in the simulation environment modelling a three-dimensional space. The spatial work model 70 is a representation of a real item of work at an initial stage of manufacture, and various subsequent stages of manufacture. In an embodiment, the spatial work model is iteratively updated to represent an amount of material that is progressively removed from the work as a result of a machining operation carried out between one or more steps of a planned machining trajectory. Therefore, in embodiments, the geometric form of the spatial work model is a function of time, and/or of the progress of steps of the planned machining trajectory.

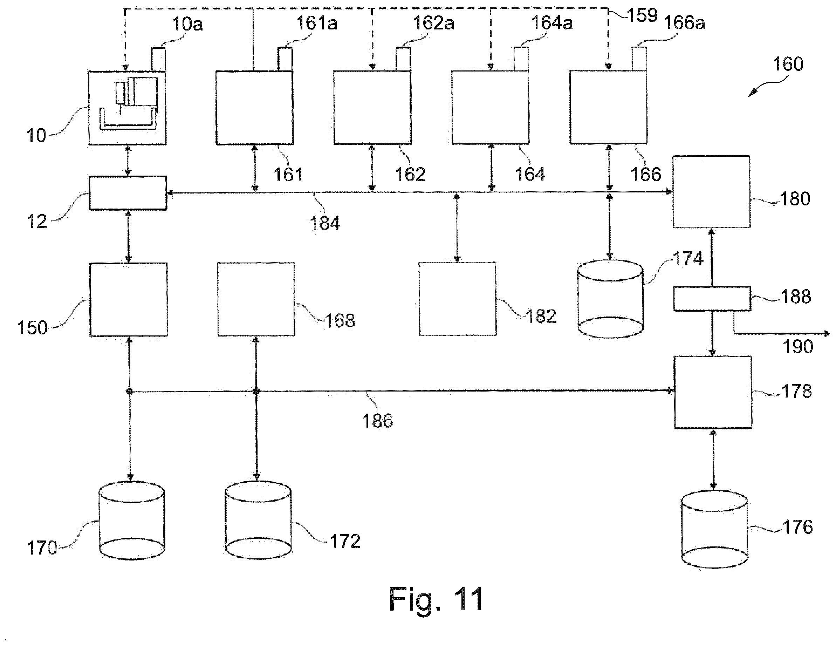

The tool trajectory T1-T3 defines the movements of the tool 50 relative to the work 46 as a function of time to manufacture a finished part from the work 46. Each measurement of tool characteristics is, in an example, timestamped based on the location of the tool 50 at a given stage of the tool trajectory T1-T3. The tool trajectory is therefore also representable in the simulation environment modelling a three-dimensional space. The tool trajectory may, for example, be generated from CAD/CAM instructions (such as G-code, RS-274) by a design computer 178 of a CAD/CAM manufacturing system 160 (see Fig. 11).

According to an embodiment, the method further comprises measuring a tool trajectory T1-T3 during a machining process, and the engagement area 49A-C is recomputed based on the measured tool trajectory T1-T3.

According to an embodiment, the tool trajectory T1-T3 is generated using machining program code.

The tool trajectory T1-T3, spatial work model 70, and spatial tool model 72 are registered 106 into the same coordinate system of the simulation environment modelling a three-dimensional space. The registration method may be rigid registration, for example. Therefore, a simulated step of the spatial tool model 72 along the tool trajectory T1-T3 (simulated in the simulation environment modelling three-dimensional space) represents the spatial relationship between a tool 50 and an item of work 46 in a manufacturing operation in a vertical machining center 10, for example.

The simulation environment partitions 108 the spatial tool model 72 into a plurality of slices S1-S6 along the longitudinal axis L of the spatial tool model 72. As the spatial tool model 72 is translated in the simulation environment, the location of the plurality of slices S1-S6 in the simulation environment moves relative to the tool trajectory T1-T3. For example, the boundary of each slice of the plurality of slices S1-S6 defines a plane is orthogonal to the longitudinal axis L of the spatial tool model 72, wherein each slice is bounded by a line representing the circumference of the spatial tool model 72 at the corresponding plane. The slices may be regularly spaced or irregularly spaced. For example, the slices may be distributed with a higher density (a lower longitudinal height in the distance of the longitudinal axis of the spatial tool model 72) around areas of the corresponding tool 50 expected to degrade more quickly. In another example, the slices may be distributed based on the type of tool 50 characterised by the spatial tool model 50. In the case of a center lathe for turning, or other turning operations, the slices may be defined by the edge of the turning tool, which typically has an "L", or pointed, shape along the edge of the insert.

The simulation environment computes, at an arbitrary step of the tool trajectory T1-T3, the three-dimensional intercept or union between the outer boundary of the spatial tool model 72 and the relevant iteration of the spatial work model 70. In particular, the area or slices of the spatial tool model 72 deemed by the simulation environment to contact the machined surface of the spatial work model 70 prior to removing a chip of material are computed. According to an embodiment, a binary indication of which slices, out of the plurality of slices S1-S6 contact the spatial work model 70 for each step of the trajectory T1-T3 is provided. For example, a slice of the spatial tool model 72 that contacts a portion of the spatial work model 70 at a given step of the tool trajectory is denoted as having been activated. Conversely, a slice of the spatial tool model 72 that does not contact a portion of the spatial work model at a given step tool trajectory is denoted as deactivated. Because the tool 50 is rotated (or is simulated as being rotated) around the longitudinal axis at many revolutions per second, the load (or wear) is equally distributed around an entire slice that contacts the work. For example, the load (or wear) is related to the area of the tool 50 in contact with the work. A tool 50 that engages a small point of the work experiences significantly less load (or wear) than a tool 50 that is deeply embedded in the work.

According to an embodiment, simulating the engagement area 49A-C of the one or more slices S1-S6 of the spatial tool model 72 with the spatial work model 70A-C at the at least one step of the tool trajectory T1-T3 further comprises:
- determining that, during the at least one step, an interference of the outer boundary of the at least one slice of the spatial tool model 72 at, or within an outer boundary of the spatial work model 70A-C has occurred; and
- designating the at least one slice of the spatial tool model 72 determined to interfere within the outer boundary of the spatial work model 70A-C as an activated slice.

According to an embodiment, simulating the engagement area 49A-C of the one or more slices S1-S6 of the spatial tool model 72 with the spatial work model 70A-C at the at least one step of the tool trajectory T1-T3 further comprises:
- determining that, during the at least one step of the tool trajectory T1-T3, an interference of a boundary point of at least one slice of the spatial tool model 72 within, or at, an outer boundary of the spatial work model 70A-C has not occurred; and
- designating the at least one slice of the spatial tool model 72 determined to interfere within the outer boundary of the spatial work model 70A-C as an inactive slice.

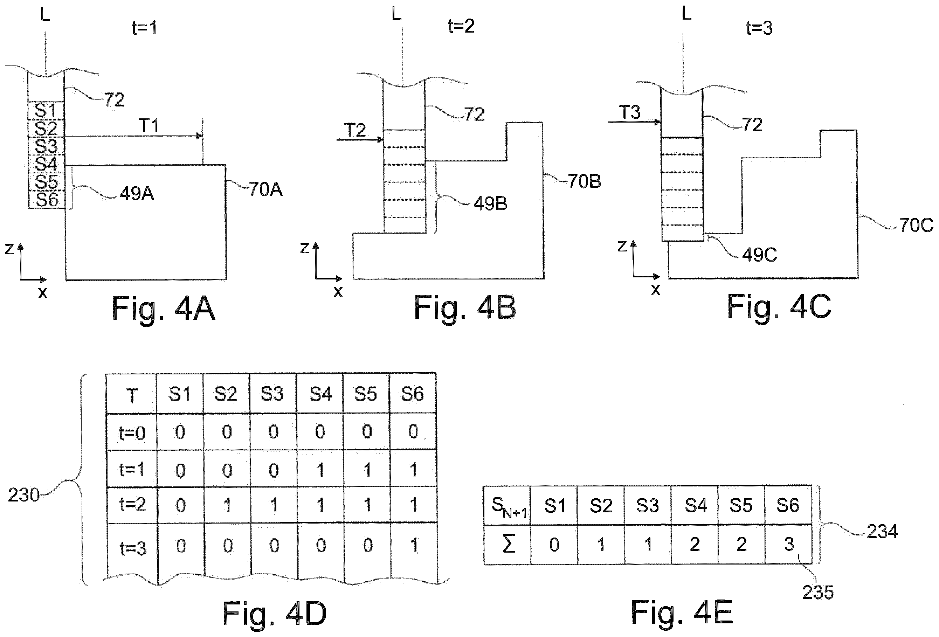

Figs. 4A - 4C schematically illustrate stages of an engagement simulation.

In Fig. 4A, showing a time step t = 1 along the tool trajectory T1, a spatial tool model 72 contacts an engagement area at the edge of a spatial work model 70A. The outer boundary of slices S4, S5, and S6 of the spatial tool model 72 are simulated to contact (in other words, geometrically intercept or interfere with) the spatial work model 70A, and the slices are designated by the simulation as activated. The remaining slices are designated by the simulation as inactivated.

In Fig. 4B, showing the time step t = 2 along the tool trajectory T2, comparison of Figs 4A and 4B reveals that the trajectory step T1 has removed a portion of material approximately 2.5 slices deep from the top of the original spatial work model 70A. Then, the tool trajectory T2 requires making a deeper cut into the spatial work model 72, resulting in activation of slices S2 to S6 caused by the relatively larger engagement area 49B with spatial work model 70B.

In Fig. 4C, showing the time step t = 3 along the tool trajectory T3, the spatial tool model 72 is moved to intercept the spatial work model 70C, representing a very shallow slot that activates only one slice of the spatial tool model 72.

Fig. 4D shows an activation table of corresponding slices of the spatial tool model 72 at different time steps of the simulation. At time step t = 0, it is assumed that no engagement of the tool with work 49A occurs. At time step t = 1, engagement of slices S4, S5, and S6 occurs as represented by the binary flags in table 230, row t= 1. At time step t = 2, engagement of slices S2, S3, S4, S5, and S6 occurs, as represented by the binary flags in table 230, row t = 2. At time step t = 3, engagement of slice S6 occurs as represented by the binary flag in table 230, row t=3.

Fig. 4E schematically illustrates an example of a data structure 234 comprising a local tool utilization function 235 generated according to the trajectory shown in Figs 4A-4C. In the case of Fig. 4E, the time range of interest is between t = 0 and t = 3. At the time steps, the activated slices are accumulated to represent a total engagement of each slice of the plurality of slices for a portion of the trajectory of interest. If the accumulation is made of the entire trajectory, a measure related to tool load (wear) can be added to a lifetime tool load (wear) uniquely associated with a real machine tool 50. For example, S2 and S3 have each accumulated one unit of load, slices S4 and S5 have each accumulated two units of load, and slice S6 has accumulated three units of load.

According to an embodiment, during a machining operation, the area or slices of the spatial tool model 72 deemed by the simulation environment to contact the machined surface of the spatial work model at each step of the tool trajectory are referenced using the stage of the tool trajectory T1-T3. For example, a timestamp is applied to a record of the area or slices of the spatial tool model 72 that are activated at each step. Therefore, measurements and events detected by the measurement unit 18 of the machining center 10 are obtained and referenced to each timestamp as a precursor to generating the local tool utilization function.

According to an embodiment, simulating the engagement area 49A-C comprises:
- determining a subset of the one or more slices S1-S6 of the spatial tool model 72 that intersect with the spatial work model for the at least one step of the tool trajectory T1-T3; and
- updating the local tool utilization function 235 characterizing the outer boundary of the spatial tool model 72 comprises:
   updating at least one histogram comprised in the data structure 234, wherein the histogram comprises a plurality of histogram bins, wherein each histogram bin is associated with a corresponding slice of the spatial tool model 72 for at least one step of the tool trajectory T1-T3,
   wherein the at least one histogram characterizes, for the one or more slices S1-S6 of the spatial tool model 72, the at least one accumulated metric 235 dependent on the number of slices S1-S6 of the spatial tool model 72 that engage with the spatial work model 70A-C for at least one step of the tool trajectory T1-T3.

The data structure 234 of Fig. 4E can represent, in some embodiments, a histogram recording the level of homogeneity that a tool 50 has experienced through a particular tool trajectory, or the entire life of the tool 50. Future tool trajectory planning operations can, for example, use the histogram associated with a unique tool 50 and avoid machining with the unique tool 50 at attitudes that could worsen an un-homogenously worn tool, for example. According to another example, if one bin of the histogram exceeds a certain magnitude, this is an indication that a predetermined load condition has been exceeded for the slice of the unique tool 50 that the histogram bin corresponds to. This could trigger, for example, an exchange of a first tool 50 for a second tool, an automated laser or automated visual inspection operation, or an automated cleaning operation.

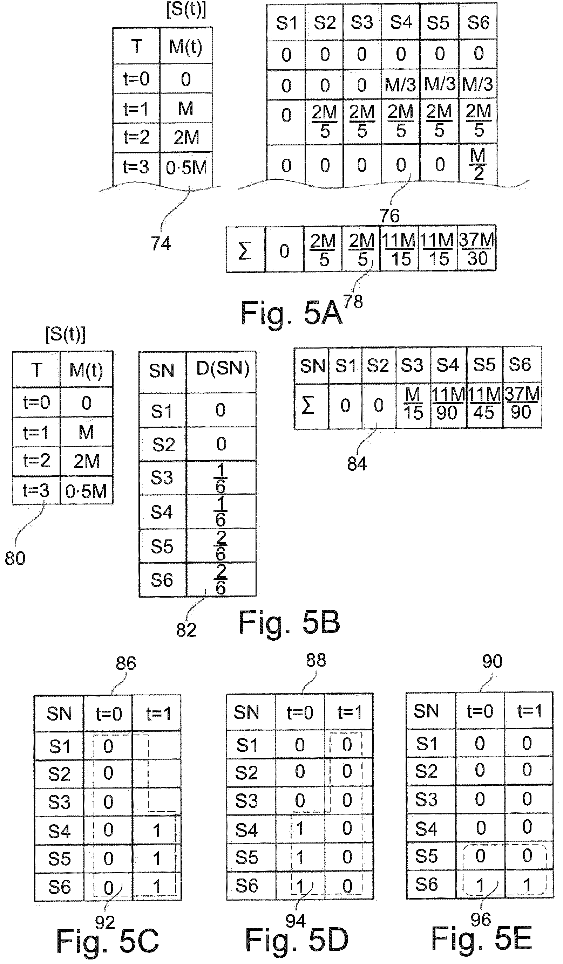

Fig. 5A schematically illustrates an example of combining a measurement with the determination of activated slices.

According to an embodiment, the method further comprises:
- obtaining at least one measurement M(t) from a numerical control unit communicably coupled to a machining center during the execution of the at least one step of the tool trajectory T1-T3, wherein the at least one accumulated metric 235 comprises the at least one measurement M(t).

The machining center 10 of Fig. 1 comprises a measurement unit 18 capable of obtaining a range of measurements characterising a machining operation with an accurate timestamp. As one example, the measured spindle torque per slice, spindle speed and/or feed speed of a machining operation are related to the instantaneous load applied to the engagement area between a machine tool 50 and work 46. By combining time stamped measured real spindle torque and/or process torque and/or spindle speed and/or feed speed with the simulation of the engagement area (time stamped activated and deactivated slices) between the spatial work mode 70 and the outer boundary of the spatial tool model 72, a more realistic load (wear) characteristic of a unique tool can be generated and stored in the data structure 234.

The measured load can give relevant data relating to company-specific combinations of process parameters (conditions), lubricants and materials. The incorporation of the real cutting speed in, for example, a ball end mill with changing tool radius leads to significant improvements of wear modelling, for example because the changing tool radius influences time-dependent heat flux effects.

According to an embodiment, the measurement is one, or more, or any combination, of: spindle current, spindle load, spindle torque, tool bending moment, torsion, process force, X servo torque, Y servo torque, Z servo torque, A axis servo torque, B axis servo torque, C servo torque, vibration, noise, engagement time, tool center point path length, a detected event, and/or energy consumption of the machining center.

According to an embodiment, for each step of an execution of the tool trajectory T1-T3, the at least one accumulated metric 235 is provided by accumulating the value of the measurement M(t) in each activated slice equally, at the respective at least one step.

In Fig. 5A, an example of a time indexed measurement 74 is combined with an example of a time indexed table 76 of activated and inactivated slices of the spatial tool model 72. The time indexed measurement 74 may be one, or any combination, of the measured quantities listed below, for example. To generate the time indexed table 76, a software environment distributes the magnitude of the measurement M(t) equally over the activated slices at the corresponding time step. The rationale behind this option is that for some combinations of tool trajectory, tool type, and work type, the effect of the engagement of the tool 50 with the work 46 is equally distributed among areas of the tool 50 that contact the work 46.

According to an embodiment, for each step of an execution of the tool trajectory T1-T3, the at least one accumulated metric 235 is provided by accumulating the value of the measurement M(t) in each activated slice, at the respective step.

According to an embodiment, for each step of an execution of the tool trajectory T1-T3, the at least one accumulated metric 235 is provided by accumulating the value of the measurement M(t) in each activated slice by weighting the measurement M(t) according to a value of a simulated quantity at the respective step. For example, in Fig. 5A, table 74, it is not essential that a real measurement M(t) is obtained from the machining center 10. In some embodiments, the simulation environment may simulate a quantity such as the maximum chip thickness of an undeformed slice, or active cutting force per slice (as just two examples). For example, the simulation environment may use a lookup table, parametric function, or machine learning model to predict one or more measurable quantities using a simulation approach. Table 78 shows an integral measurements distributed over activated slices, computed as a combination of tables 74 and 76.

According to an embodiment, for each step of an execution of the tool trajectory T1-T3, the at least one accumulated metric 235 is provided by accumulating a composite value in each in each activated slice, wherein the composite value is generated as a function of one or more measurements M(t), and one or more simulated quantities, at the respective step. Therefore, the accumulated metric may be a compound of simulated and measured quantities.

According to an embodiment, for at least one step of the tool trajectory T1-T3, the at least one accumulated metric 235 characterizing the plurality of the activated slices S1-S6 is obtained, at least partially, or entirely, by simulation.

According to an embodiment, the at least one accumulated metric 235 comprises one, or more, or any combination of the following simulated metrics: cutting angle, depth of cut, width of cut, radial engagement, engagement angle, cutting volume, material removal rate, contact length, maximum thickness of undeformed chip, or force, a zero cutting velocity condition 96. Furthermore, the at least one accumulated metric 235 comprises one, or more, or any combination of the following simulated events: a zero cutting velocity condition, insert chipping, a simulated work entrance or simulated work exit.

According to an embodiment, the method further comprises, for each step of an execution of the tool trajectory T1-T3 providing the at least one accumulated metric 235 by accumulating the value of the measurement M(t) in each activated slice by weighting the measurement according to a simulated material interaction function at each activated slice, at the respective step, wherein the simulated material interaction function is computed using the simulated engagement area, wherein the simulated material interaction function is one, or any combination, of material removal rate, maximum chip thickness, radial depth of cut, or engagement angle.

A simulated material interaction function characterises an amount of material of the work that is removed, or will be removed, from the work as a result of implementing a predefined tool trajectory over a predefined number of trajectory steps or time steps.

According to an example, the method further comprises for each step of an execution of the tool trajectory T1-T3, providing the at least one accumulated metric 235 by accumulating the value of the measurement M(t) in each activated slice by weighting the measurement M(t) according to a simulated material removal rate at each activated slice, at the respective step, wherein the simulated material removal rate is computed using the simulated engagement area 49A-C.

One definition of material removal rate, MRR, is the depth of the cut multiplied by the width of the cut multiplied by the feed rate. Material removal rate is therefore dimensioned in cubic centimetres per minute. According to an embodiment, the simulation environment is configured to model the interaction between the outer surface of the spatial tool model 72 with the spatial work model 70, to thus obtain the MRR at, or between, given time points of a tool trajectory. In other words, the geometrical union of the outer surface of the spatial tool model 72 with the spatial work model 70 over a predetermined time interval can be integrated with respect to three-dimensional space to yield an estimate of the volume of material removed over the predetermined time interval, and thus the MRR. The MRR can be accumulated in the data structure 234 for a plurality of time steps associated with the tool trajectory, and/or the MRR can be combined with other measurements also related values for a plurality of time steps associated with the tool trajectory.

According to an embodiment, the method further comprises for each step of an execution of the tool trajectory T1-T3, providing the at least one accumulated metric 235 by accumulating the value of the measurement M(t) in each activated slice by weighting the measurement M(t) according to a simulated maximum thickness of an undeformed chip at each activated slice, at the respective step, wherein the simulated maximum thickness of an undeformed chip is computed using the simulated engagement area 49A-C.

For cylindrical or hemispherical tool, the geometrical transition of an outer surface of a spatial tool model 72 between one step and a subsequent step of a machining trajectory in a spatial work model 70 delineates a crescent-shaped artefact of removed material referred to as a chip. Therefore, the maximum thickness of a chip before removal can be computed in the simulation environment based on the knowledge of two consecutive points in the tool trajectory. Activated slices in the data structure 234 may, therefore, be weighted by the maximum (or alternatively average) thickness of the chip.

Fig. 5B schematically illustrates an example of accumulating measurements according to a reference distribution.

According to an embodiment, the method further comprises, for each step of an execution of the tool trajectory T1-T3 accumulating the value in each activated slice of the measurement M(t) into according to a reference distribution D(SN,t), wherein the reference distribution D(SN,t) is optionally selected based on a type of measurement performed and/or a type of tool in use at the time of the measurement M(t). In an embodiment, the reference distribution D(SN,t) is a function of time. For example, the reference distribution D(SN,t) may be changed dependent on the application of coolant fluid, or as a function of the trajectory T1-T3.

According to this embodiment, a reference distribution of table 74 enables finer control of the distribution of magnitude in the measurement M(t) and/or simulated measurement S(t) in activated slices. For example, prior analysis may reveal that the shape of specific tools causes a distribution of force according to a specific distribution that can be captured in the reference distribution. In another example, the reference distribution may be generated based on an automated laser measurement or an automated visual measurement of a machine tool 50.

In Fig. 5B, data structure 80 represents the measurement M(t) or simulated measurement S(t) accumulated based on the slice activation table 230 combined with the reference distribution D(SN,t) of data structure 82. The reference distribution D(SN,t) provides weighting by slice activation number for the accumulated magnitude of the measurements M(t). Table 84 shows the sum of the measurements distributed according to a reference distribution into the activated slices.

According to an embodiment, the reference distribution D(SN, t) changes as a function of the slice activation. For example, the reference distribution D(SN,t) of data structure 82 does not distribute the total magnitude of the measurements M(t) in the case that one of slices S3 to S6 is not activated. If it is viewed as beneficial to distribute the total magnitude of the measurements M(t) regardless of slice activation at all times, the reference distribution D(SN,t) may also be made a function of the permutation of the slice activation. For example, the reference distribution may be generated using a Markov chain, in which the distribution is changed based on one or more possible combinations of slice activation status.

According to an embodiment, the method further comprises for each step of an execution of the tool trajectory T1-T3, detecting one, or more events during at least one step of the tool trajectory T1-T3; and accumulating the one or more events into each activated slice to provide the at least one accumulated metric 235.

The detection of an event is a special case of a measured condition or a simulated condition. For example, video or audio sensors may detect the application of cleaning fluid onto the tool 50, the failure of lubricant pumping, or the splashing of lubricant onto the tool. The application of cleaning fluid has an effect on tool load, and by characterising the application of cleaning fluid onto the tool 50 a more accurate local tool utilization function 235 can be obtained. Non-linear discontinuities in the servomotor power supply of a machining center may enable detection of an entry or exit condition of a tool 50 from work 46. According to an example, specific algorithms may detect chipping at the cutting edges using the servo measurements. Chipping events are accumulated for activated slices. Of course, the entry or exit condition can also be simulated based on the movement of a spatial tool model 72 relative to a spatial work model 70.

Optionally, an event is a detected work entry or a detected work exit condition.

Fig. 5C illustrates an example of a slice activation function 86 for detecting a work entry condition. At t = 0, no slices are activated. At t = 1, the three distal slices of the spatial tool model 72 are activated. The discontinuity 92 can be interpreted as a work entry condition.

Fig. 5D illustrates an example of a slice activation function 88 for detecting a work exit condition. At t = 0, the three distal slices of the spatial tool model 72 are activated. At t = 1, all slices of the spatial tool model 72 are deactivated. The discontinuity 94 can be interpreted as a work exit condition.

According to an embodiment, for each of the plurality of activated slices S1-S6, the thickness of an undeformed chip at an engagement exit or entrance of the spatial tool model 72 relative to the spatial work model 70A-C during engagement with the spatial work model 70A-C is calculated. Optionally, the calculation is based on the simulated geometry of an engagement exit of the spatial tool model 72 relative to the spatial work model 70A-C during engagement with the spatial work model 70A-C.

According to an embodiment, for each of the plurality of the activated slices S1-S6, a wear indicator and/or process force is simulated. The wear indicator or process force is optionally based on simulated chip thickness, simulated process force, measured spindle torque, measured process force, a cutting speed of the respective activated slice and/or at least one measurement M(t) from the numerical control unit.

The wear indicator is derived from more a precise but complex scientific model for continuous wear. The wear indicator considers not only process force but also cutting speed as friction/deformation influence factor for heat generation and also transient heat conduction dependent on real cutting speed.

Fig. 5E schematically illustrates an example of slice activation for a zero cutting velocity condition.

According to an embodiment, there is provided detecting, based on the at least one accumulated metric 235, that the slice at a distal end of the spatial tool model 72 has been activated for at least one step of the tool trajectory T1-T3, and updating the data structure 234 with an event denoting a zero cutting velocity condition 96 related to the at least one step of the tool trajectory T1-T3.

In Fig. 5E, slice activation function 90 shows that for both time steps, the most distal slice S6 of the spatial tool model 72 has been activated (discontinuity 96). For example, ball nose end mills should be used at an angle to the work to avoid a zero cutting velocity condition. In the case of a pure simulation of a machine operation, the detection of 80 velocity condition can be used to future warning of a zero cutting velocity condition. In an embodiment, the portions of the tool trajectory T1-T3 susceptible to the zero cutting velocity condition can be recomputed so that the machining of the work 46 can proceed without a zero cutting velocity condition being encountered.

Alternatively, the simulation environment used in parallel with a machining operation may be used to denote timestamps of machine measurements M(t) at which a zero cutting velocity condition occurred, so that a data structure 234 comprising a tool life function can be more accurately updated with the realistic milling conditions (for example, measured spindle torque per slice, spindle speed, feed rate) at the time that the zero cutting velocity condition was detected as an event.

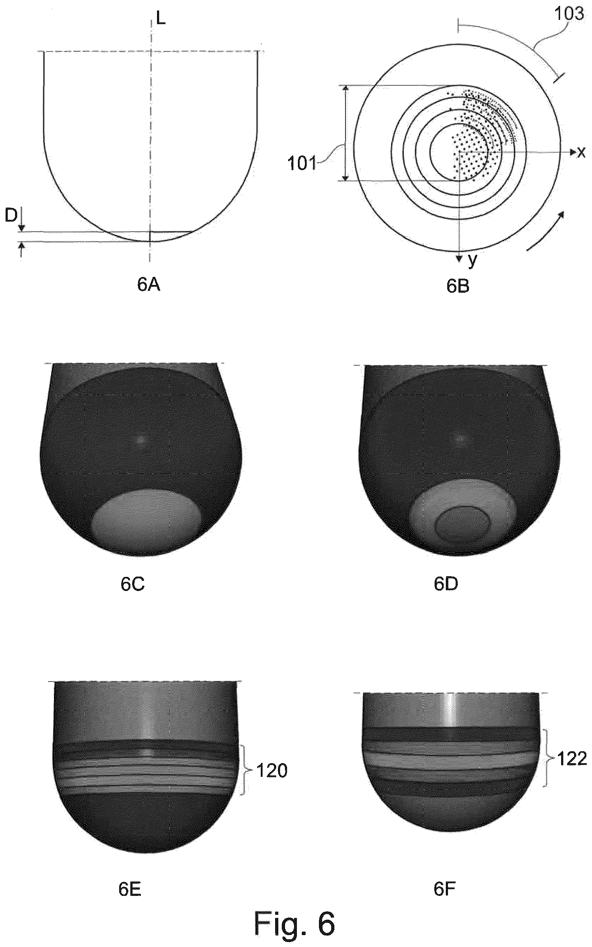

Figs. 6A-6B schematically illustrates contact slices of a ball end mill. In the schematic side view of Fig. 6A, D is the depth of cut. In the schematic distal end view of Fig. 6B, the cutting width 101 (for a ball end cutter, engagement width is a function of tool insertion depth) and the engagement angle 103 for a specimen cutting volume are shown.

In the colour version of the drawings accompanying this specification, red shading of a feature indicates a proportionately higher scalar quantity, and blue shading of a feature represents a proportionately lower scalar quantity. In the black and white alternative version of the drawings accompanying this specification, lighter shading represents a proportionately higher scalar quantity and darker shading represents a proportionately lower scalar quantity.

Figs. 6C-6D schematically illustrates a case for a ball end mill in three axis machining examples of non-homogeneous local tool utilization functions 235. In particular, Fig. 6C illustrates the accumulated radial engagement (%) with the work at a distal end of the ball end mill. Fig 6D illustrates the cutting time (%) in the same case. The accumulated radial engagement (computed using the slice activation technique discussed in the present application) can be seen to be a more gradual or realistic accumulated metric than the cutting time (also computed using the slice activation technique discussed in the present application).

Figs. 6E-6F schematically illustrate examples of non-homogeneous local tool utilization function 235s for a D12 semi-finishing ball end mill applied in five axis machining. In Fig. 6E, the normalised cutting time 120 (%) per slice is shown for a loaded area of approximately 2.5 mm. In Fig. 6F, the accumulated radial engagement 122 (%) is shown with loaded area of approximately 1.5 mm, for the same tool. The cumulated radial engagement is again seen to give a more realistic looking related metric and the cutting time.

According to an embodiment, there is provided identifying, for the at least one step, or for as a function of the tool trajectory T1-T3, a non-homogeneous engagement condition using the local tool utilization function 235 associated with the spatial representation of the outer boundary of the spatial tool model 72. Optionally, there is provided the step of amending the tool trajectory T1-T3 to reduce or to remove the non-homogenous engagement condition; and/or specifying the use of a substitute tool for the tool trajectory T1-T3.

In one example, the simulation environment may characterise, for some or all of the tool trajectory T1-T3, a prediction of a non-homogeneous engagement condition on part of an outer boundary of the spatial tool model 72. In an example, if a simulated non-homogeneous engagement condition is detected after performing a portion of the simulated engagement of the spatial tool model 72 with the spatial work model 70 exceeds a predetermined non-homogeneity threshold, the simulation environment sender command to a CAD/CAM system, for example of a manufacturing system 160, or a machining center 10, to state that a replanning of some or all of the tool trajectory T1-T3 should be performed. The predetermined non-homogeneity threshold may, for example, be based on the standard deviation of histogram data in the data structure 234. The aforementioned process therefore detects non-homogeneous engagement and corrects the tool trajectory T1-T3 before any manufacturing takes place.

In another example, one or more partially used tools 50 are each associated with unique identifiers and unique local tool utilization functions 235. The simulation environment may obtain a tool trajectory T1-T3 to performed, search for one or more non-homogeneous engagement conditions in the tool trajectory T1-T3 to performed, and select a partially used tool from the set of one or more partially used tools by comparing the unique local tool utilization functions of each partially used tool with the non-homogeneous engagement conditions in the tool trajectory T1-T3 to be performed. For example, the non-homogeneous engagement conditions may be compared using heuristic search against the local tool utilization function 235s of the partially used tools. According to an example, the search would optimize for a tool with a non-homogenous engagement condition whose standard deviation would be lower, or lowest, out of the set of partially used tools, after performing the tool trajectory T1-T3

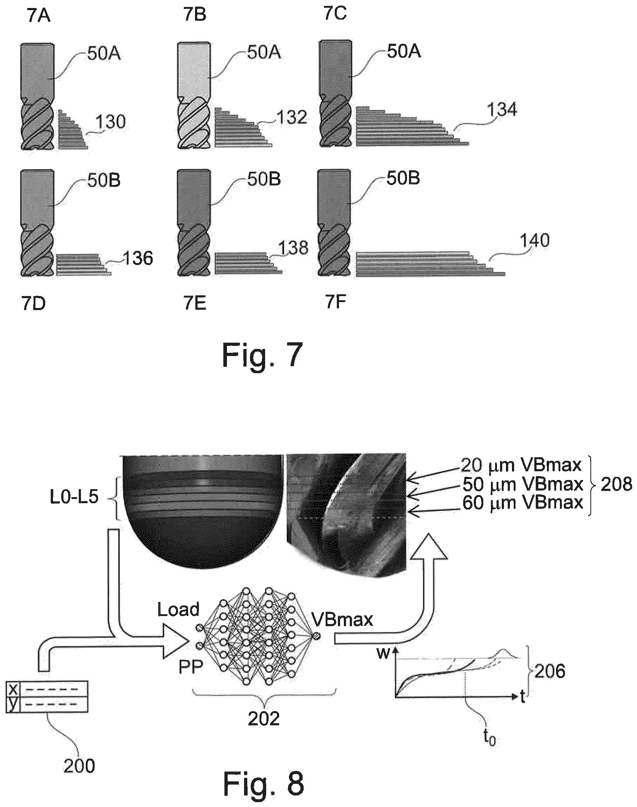

Figs. 7A-7F schematically illustrates examples of local tool utilization function 235s.

Figs. 7A-7C represent a scenario where the entire longitudinal length of the cutting area of tool 50A is used for cutting. The local tool utilization function 130, 132, 134 at progressive time steps show a more even distribution of the cutting load along an engagement area of the tool 50A as compared to the local tool utilization functions 136, 138, 140 of Figs. 7D-7E. In particular, in Figs. 7E and 7F the magnitude of the distal slices of the local tool utilization functions 138 and 140 exceeds a predetermined load condition where damage to the tool 50B occurs.

According to an embodiment, there is provided identifying, for the at least one step, or as a function of the tool trajectory T1-T3, a location of a predetermined load condition relative to the surface of the spatial tool model 72 using the local tool utilization function 235 associated with the spatial representation of the outer boundary of the spatial tool model 72.

According to embodiment, identification of the location of the predetermined load condition using the local tool utilization function 235 can performed by the simulation environment before any operation is performed using the tool 50. According to another embodiment, identification of the location of the predetermined load condition using the local tool utilization function235 may be formed based on a local tool utilization function 235 that accumulates a combination of the simulation engagement of the tool 50 with the work 46.

According to an embodiment, the method 100 comprises labelling the spatial tool model 72 with locations representing the presence of a predetermined load condition associated with one or more activated slice on the spatial representation of the outer boundary of the spatial tool model 72; and amending the tool trajectory T1-T3, or the entire tool trajectory T1-T3, so that with locations representing the presence of the predetermined load condition associated with activated slices S1-S6 on the spatial representation of the outer boundary of the spatial tool model 72 are not used for subsequent machining. In this way, the overall lifetime of a tool 50 associated with the spatial tool model 72A via a unique identifier can be extended, because the tool 50 is not used along sections that have already been exposed to a predetermined load condition.

According to an embodiment, the method 100 comprises signalling a command to perform local cleaning of the tool at the location of the predetermined load condition, optionally prior to performing a tool measurement.

In embodiments, a manufacturing system 160 may comprise a tool cleaner 164. Tool cleaners are typically configured to direct a stream of gas or liquid at locations on a machine tool 50 that have been damaged or clogged during manufacturing in an attempt to extend the life of the machine tool 50. Alternatively, a tool may be plunged into an ultrasonic bath. Cleaning that is too frequent may reduce efficiency because too many tools will be unavailable to a plurality of machining centers in a manufacturing system 160. Cleaning that is not frequent enough may reduce efficiency by leading to tool and even work damage. According to the present embodiment, if a predetermined load condition is detected using the tool where function, a tool can be sent for local cleaning, optionally at the location on the tool defined by the predetermined load condition. Accordingly, tool cleaning is performed at the correct point in time, and at the appropriate location on the tool 50 where cleaning is needed.

According to an embodiment, the method 100 comprises signalling a command to perform local laser-based tool wear measurement at the location of the predetermined load condition. According to an embodiment, the method 100 comprises signalling a command to perform local vision-based tool wear measurement at the location of the predetermined load condition. In embodiments, a manufacturing system 160 may comprise one or more of a laser measuring device 161 and/or a visual (image-based) measuring device 162. Upon detection of the predetermined load condition, it may be necessary to remove tool from a machining center 10, and to characterise potential damage indicated by the predetermined load condition using one or both of laser or image-based techniques. In this way, the detection of the predetermined load condition serves as a trigger for inspection of tool condition, rather than needing to regularly inspect tools that have not been exposed to the predetermined load condition. Providing the location (based on the local tool utilization function) along the tool 50 at which the predetermined load condition was detected leads to a quicker inspection, because the location on the tool that is most likely to have been damaged is known in advance by the laser measuring device 161 and/or the visual measuring device 162.

According to an embodiment, the method 100 comprises signalling a command specifying the use of a substitute insert at the location of the predetermined load condition, and/or a command to substitute at least one tool or cutter insert.

According to the local tool utilization function 235 of a first tool, the simulation performed in the simulation environment may determine that a first tool is not appropriate for performing a particular trajectory T1-T3 or portion of the trajectory, because a portion of the first tool that has been exposed to an excessive predetermined load condition would again be required to be exposed to an excessive predetermined load condition. In this case, the simulation environment may send a command to a plant control computer 182 requesting that the first tool is withdrawn from the machining center 10 and a substitute tool is provided to the machining center 10 from the tool storage device 166.

According to an embodiment, the method comprises performing, using a tool associated with the spatial tool model 72, a machining operation on work specified by the tool trajectory T1-T3, and storing, in a tool database 170, the local tool utilization function 235 and the unique identifier of the tool. Accordingly, with every use of the tool 50, a local tool utilization function 235 of a corresponding spatial tool model 72 is updated to reflect the working conditions that the tool 50 has experienced. In other words, the corresponding spatial tool model 72 may be considered to represent a "digital twin" of a unique tool 50. This enables a plant control computer 182 or manufacturing controller 180 of manufacturing system 1602 uniquely assign individual tools 50 stored in a tool storage device 166 to specific machining tasks. One aim may be, for example, to ensure optimum homogenisation of the load (wear) characteristic population of tools in the machining system 160.

According to an embodiment, there is provided loading, from the tool database, a stored local tool utilization function 235 using the unique identifier of the tool or spatial tool model 72, performing a virtual and/or a real machining operation on real work, or on a further spatial work model 70A-C, as specified a further tool trajectory; and in the case of a real machining operation updating the stored local tool utilization function 235 associated with the unique identifier, thereby characterizing changes to the tool caused by the real machining operation.

Alternatively, in the case of a virtual machining operation, there is provided updating a copy of the local tool utilization function 235, wherein the copy of the local tool utilization function is related to a prospective use of the tool associated with the unique identifier on the further spatial work model 70A-C. Therefore, a user of a manufacturing system 160 can perform predictions on the population of tools in a tool storage unit 166 to characterise the future life of one more of the tools in the tool storage unit 166 based on based on the future machining plan, for example.

According to an embodiment, the method further comprises outputting, on a graphical user interface, a graphical representation of a tool using the local tool utilization function 235 characterizing the outer boundary of the spatial tool model 72 as computed according to one of the preceding claims.

According to an embodiment, the method further comprises displaying the local tool utilization function 235 on a graphical user interface, optionally as an overlay to a graphical representation of the tool to which the local tool utilization function 235 relates.

According to an embodiment, the method further comprises indicating, as an overlay to a graphical representation of the tool, at least one location on the tool that has been subject to an excessive load condition.

Fig. 8 schematically illustrates an example of a machine learning approach.

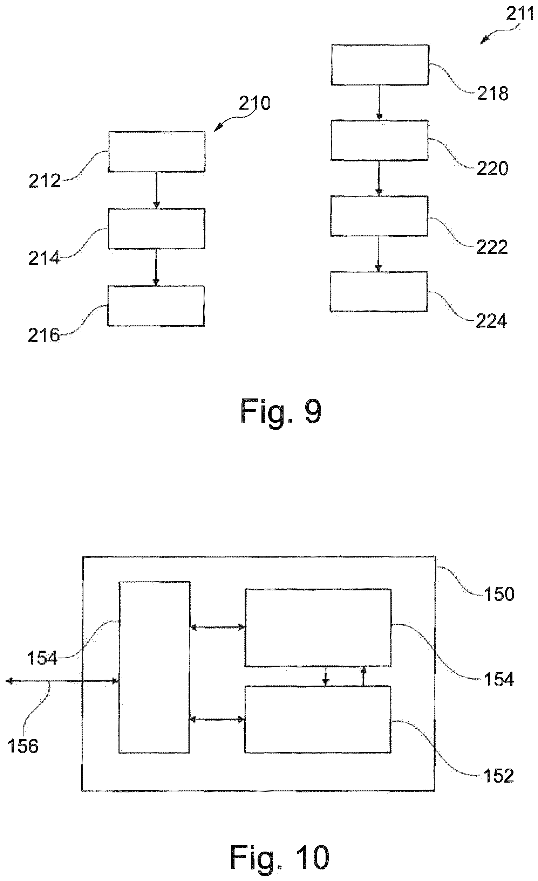

Fig. 9 schematically illustrates machine learning methods.

According to a second aspect, there is provided a method for training a machine learning model. The method comprises:
- obtaining 212 a plurality of data structures 234 each comprising a local tool utilization function 235 as computed according the first aspect;
- obtaining 214 one or more process conditions 200 corresponding to the local tool utilization functions 235, wherein the process conditions 200 are measured and/or simulated;
- training 216 a machine learning model to predict a tool utilization output of at least one tool using the plurality of data structures and one or more process conditions 200.

For example, the tool utilization output is a local wear measurement, or a slice-based wear measurement.

Fig. 8 schematically illustrates an example of generating a dataset for training a machine learning model. Machine learning involves training models using algorithms and datasets to recognise patterns and make predictions. The combination of data structures 234 (L0-L5) and process conditions 200 are together referred to as training data for training the machine learning model 202. The training data may be scheduled in a number of ways.

The training data comprises pairs of (i) local tool utilization functions computed for a trajectory T1-T3 according to the method of the first aspect, and (ii) sets of process conditions 200 which have been measured and/or simulated during execution of a trajectory T1-T3.

Therefore, each local tool utilization function corresponds to at least one set of process conditions 200. The dataset may comprise a large number (more than 100, more than 1000, more than 10,000) of pairs of local tool utilization functions and process conditions 200. Through an iterative process, the machine learning model is trained to provide predictions 206, 208 of, for example, the wear value (VBmax) having been provided, as an input, with a local tool utilization function 235, L0-L5 and corresponding process conditions 200.

According to a first variant, one data structure 234 comprising one tool utilization function 235 is paired with one process condition. As a specific example, a tool may follow a cutting trajectory T1-T3. The effect of following the cutting trajectory T1-T3 leads to the generation of a tool utilization function 235. The tool utilization function 235 is generated according to embodiments of the first aspect above, specifically taking into account spindle speed around the cutting trajectory T1-T3. For example, the spindle speed at regular or arbitrarily sampled positions on the cutting trajectory T1-T3 may be sampled and time-stamped.

This process results in a set of spindle speed samples (a function of time), and one tool utilization function 235 computed according to the method of the first aspect. In other words, the tool utilization function 235 represents the end-state of a tool that has been exposed to a spindle speed function defined by the spindle speed samples over the path of the cutting trajectory T1-T3. Together, the one tool utilization function 235 and the spindle speed samples represent one pair of training data. By collecting a large number of such pairs of data (over one hundred, over five hundred, over one thousand). And training the machine learning model, the machine learning model is able to predict tool wear based on identified spindle speed variations during a cutting operation.

Optionally, a tool wear result can be measured by visual means or laser means after the tool has completed the cutting trajectory T1-T3. The tool wear result can be paired with a corresponding process condition and tool utilization function 235. In this case the accuracy of the machine learning model is enhanced, because the result of the engagement simulation represented be the tool utilization function 235 is improved in accuracy by being paired with a real measurement of tool wear after completing an operation.

The training of the machine learning model according to the first variant therefore creates sets of training data, with each set of training data comprising one tool utilization function 235 associated with a set of process conditions 200 that were the precursor to, or reason for, that tool utilization function 235. A machine learning model trained according to the first variant therefore enables, given an input of foreseen or experienced process conditions 200, a representation of the final state of a cutting tool (as represented by a predicted tool utilization function output by the trained machine learning model according to the first variant.

In an example, the representation of the final state of the cutting tool may be a predicted local tool utilization function. In another example, the representation of the final state of a cutting tool may be a scalar or vector figure of merit such as wear per tool slice. In other words, the predicted local tool utilization function is a prediction of local wear based on local cumulative load.

According to a second variant, the training data comprises a plurality of data structures 234 each comprising a plurality of time-dependent local tool utilization functions 235, wherein each time-dependent tool utilization function corresponds to a process parameter. In this way, the trained machine learning model can characterize the evolution of the local tool utilization function. As an example, process conditions 200 comprising five axis tool coordinates and spindle speed are measured and timestamped during the execution of a cutting trajectory T1-T3. At each timestamp, a version of the local tool utilization function 235 at that time-stamp is associated with the temporally correspondent samples of the five-axis tool and work coordinate and spindle speed.

Therefore, one sample of training data may comprise a temporally corresponding set of (i) local tool utilization function 235, (ii) five axis coordinate sample, and (iii) spindle speed. Upon completion of a cutting trajectory, the training data for one tool would comprise a large number (over one hundred, over five hundred, over one thousand) of samples. Furthermore, training data for a large number of tools (over one hundred, over five hundred, over one thousand) would also be collected. When trained on such a training data set, a machine learning model is capable of predicting the evolution (or time dependence) of a tool utilization function 206 (such as wear, VBmax) over the performance of a cutting trajectory, for example. According to an example, the model may provide a tool utilization function comprising wear values 208 at each slice of the tool.

In particular, the one or more process conditions 200 may comprise the variation of the flank wear (VB) and the maximum flank wear (VBmax) as resolved tool wear values (e.g. VBmax per slice).

An example of one or more process conditions 200 is: vibration, or force, planning (e.g. feed, speed, depth of cut, tool, material), simulation (e.g. work entries and work exits, chip thickness at work entries or work exits. Furthermore, system states (such as on "on state" of a lubrication pump) can be used as process conditions 200. Furthermore, a vision or laser-based tool wear measurement can be used as a process conditions 200.

Further examples of the one or more process conditions 200 are: process planning data (e.g. programmed feed, speed, depth of cut, tool type, material type, fixture ID, lubricant), process measurement data (e.g. vibration, or force), simulation data (e.g. engagement conditions, events like work entries and work exits, chip thickness at work entries or work exits). Furthermore, system states (e.g. alarms about lubrication pump) can be used as process conditions. Furthermore, a vision or laser-based tool wear measurement can be used as a process conditions 200. The aforementioned one or more process conditions 200 can be combined in any way to form the process condition division of the sample of training data. According to an example, the aforementioned one or more process conditions 200 are time-stamped or time-registered so as to temporally correspond to one or more tool utilization functions 235.

The training process is applied using an appropriately determined learning rate, number of epochs, and regularization parameters, for example. Examples of models that can be trained using the local tool utilization function are convolutional neural networks (CNNs), long short-term memory networks (LSTMs), generative adversarial networks (GANs), support vector machines (SVMs), or recurrent neural networks (RNNs).

These models may be trained using algorithms such as stochastic gradient descent, adaptive moment estimation, or back propagation, for example.

According to a third aspect, there is provided a method 211 for providing a tool utilization prediction, comprising:
- obtaining 218 a machine learning model trained according to the second aspect;
- generating 220 a further local tool utilization function based on a simulation of a prospective machining operation, or by executing a machining operation wherein the further tool utilization function is generated according to the method of the first aspect;
- obtaining 222 one or more process conditions 200 associated with the simulated or executed machining operation; and
- providing 224 the further local tool utilization function and the one or more process conditions as inputs to the machine learning model, to thus obtain a tool utilization output.

For example, the further local tool utilization function may represent the slice-related, cumulative load values (e.g. work done per slice). In particular, the further local tool utilization function may comprise a prediction of the variation of the flank wear (VB) and the maximum flank wear (VBmax) as resolved tool wear values (e.g. VBmax per slice). Therefore, the tool utilization output may be a prediction of local wear based on the local cumulative load.

According to an embodiment, the accumulated metric 235 is, or comprises, tool load at each step of the tool trajectory T1-T3.

Fig. 10 schematically illustrates an apparatus 150 according to former aspect.

According to a fourth aspect, there is provided an apparatus 150. The apparatus comprises a communications interface 154, at least one processor 154, and a memory 152. The at least one processor 154 is configured to perform the computer-implemented methods according to one of the first, second, or third aspects.

According to an embodiment, the apparatus is a personal computer (PC), a bare-metal server, a cloud server, an industrial machine controller, or an edge node.

The communications interface 154 is configured to perform data exchange with external devices or networks, in particular the Internet or ethernet. The at least one processor 154 is operatively connected to the communications interface and is responsible for executing software instructions and processing data. The at least one processor 154 is configured to perform computational tasks such as running the computer implemented method according to the first, second, or third aspects. The process may be a multi-core CPU, GPU, or an embedded processor dependent on the application of the apparatus 150.

The memory 152 is operatively connected to the processor 154 and is configured to store executable software code and other data. The memory 152 may comprise both volatile memory such as random-access memory for temporary data storage during operation, and non-volatile memory such as a hard disk drive or solid-state drive for long-term storage of software and data.

Optionally, the apparatus may comprise a graphics adapter to enable display of a graphical user interface on a user display.

Fig. 11 schematically illustrates an example of a manufacturing facility 160 including the system according to the fifth aspect. A skilled person appreciate that many variations of a manufacturing facility 160 including the system according fifth aspect may be provided, and that the system according to the fifth aspect is functional even without integration into the manufacturing facility 160.

The manufacturing facility 160 may comprise an industrial communications network 184 and an enterprise communications network 186. The industrial communications network 184 may employ industrial ethernet or other robust wireless communication systems. The industrial communications network 184 and the enterprise communications network 186 may be separated by a gateway 188. The gateway 188 may further be connected to a wide area network 190.

The manufacturing system 160 comprises at least one machining center 10. According to an embodiment, the at least one machining center 10 may be a vertical mill as illustrated in Fig. 1 of this application, although variety of other tools such as, without limitation, variety of machines, such as grinders, cutters, or center lathes for turning may be provided. The machining center 10 comprises an identification reader 10a enabling unique identifiers of tools 50 (such as micro-QR codes, or RFID, and the like) to be read when a tool is introduced into the machining center 10 or removed from the machining center 10, for example.

A numerical controller to is communicably coupled to the machining center 10. The numerical controller receives machining instructions for a specific piece of work in Gcode format, for example, and control the manufacture of a piece of work to a plan comprised in the machining instructions. The numerical controller is further configured to obtain one or more measurements before, during, or after, the machining process and to transmit these measurements to the tool use monitor 150.

The apparatus 150 is an apparatus according to the fourth aspect, or its embodiments. The apparatus 150 functions as tool use monitor. For a specific piece of work 46 and tool 50, the tool use monitor generates a local tool utilization function for at least one tool in the manufacturing system 160. The tool use monitor 150 is communicably coupled to the tool database 170. For example, for every unique tool in the manufacturing system 160, the tool use monitor creates and/or updates an appropriate local tool utilization function that tracks the physical status of the tool throughout its life in the manufacturing system 160.

The manufacturing system 160 further comprises a laser measuring device 161 and a visual measuring device 162, provided with respective identification readers 160a and 162a. Therefore, if the tool use monitor 150 prompts the numerical controller 2 that a tool in the machining center 10 has been subject to an excessive load condition, the machining center 10 may surrender the tool 50 to the laser measuring device 161 or to the visual measuring device 162 so that the tool 50 can be monitored for damage. Alternatively, the tool use monitor 150 may prompt the numerical controller 2 to send the tool 50 from the machining center 10 to the tool cleaner 164 (optionally also comprising a tool identifier device 164a) to enable the tool 50 to be cleaned.

The manufacturing system 160 is further provided with a tool storage apparatus 166 comprising a tool identifier 166a. The tool storage apparatus 166 can store a plurality of tools that are not in use in the manufacturing system 160. As one example, the tool use monitor 150 may instruct the tool storage apparatus 166 to issue a specific tool to the machining center 10 based on the local tool utilization function of the specific tool being more suitable to a proposed machining operation.

The machining center 10, laser measuring device 161, visual measuring device 162, tool cleaner 164, and tool storage 166, are optionally coupled via an automatic tool transfer system 159 enabling machine tools to be moved between the listed devices automatically. The automatic tool transfer system 159 may, for example, rely on robotic carts or robot arms (not illustrated). In another embodiment, tools may be substituted manually after instructions from the machines.

A manufacturing controller 180 is configured to receive manufacturing files such as G code files and other meta data from the enterprise network 186, and to orchestrate the manufacturing process of a workpiece based on the G code files. A manufacturing database 174 is configured to store the Gcode files, other meta data, and metrics about the operation of the manufacturing system. A manufacturing monitoring computer 182 is configured to monitor a plurality of machines in the manufacturing system 160 for error-free operation and to generate notifications when one of the machines in the Manufacturing system 160 requires attention. In particular, the Manufacturing monitoring computer 182 may obtain tool utilization information such as a local tool utilization function computed by the tool use monitor 150 according to the first aspect.

In the enterprise network, at least one design computer 178 is used to design products and generate manufacturing code that can be sent to the Manufacturing Controller 180. A design database 176 may contain archived designs.

The enterprise network further comprises at least one machine learning unit 168 and at least one machine learning datastore 172. According to one embodiment, the tool use monitor 150 is configured to populate the machine learning datastore 172 with a plurality of local tool utilization functions and associated process information. The at least one machine learning unit 168 is configured to perform a method according to the second aspect, and to output a machine learning model into the machine learning datastore 172. In embodiments, the tool use monitor 150 may access one or more models in the machine learning datastore for tool wear prediction.

According to a fifth aspect, there is provided a system (150, 2, 10). The system comprises the apparatus (150) according to the fourth aspect, a numerical controller (2); and a machining center (10) communicably coupled to the numerical controller.

The numerical controller 2 is configured to cause the machining center 10 to perform at least one machining operation on work associated with a spatial work model 70A-C using a machining tool associated with the tool model according to a tool trajectory T1-T3 provided by the apparatus. The machining center 10 and/or numerical controller 2 are configured to obtain feedback information during the at least one machining operation, and to provide the feedback information to the apparatus.

According to an embodiment, the feedback information comprises one, or more, of spindle current, spindle load, spindle torque, tool bending moment, torsion, process force, X servo torque, Y servo torque, Z servo torque, A axis servo torque, B axis servo torque, C servo torque, vibration, noise, engagement time, tool center point path length, and/or energy consumption.

According to a sixth aspect there is provided a computer program element comprising machine readable instructions which, when executed by a computer, cause the computer to perform the computer implemented method of one of the first, second, or third aspects.

According to a seventh aspect, there is provided a computer readable medium comprising the computer program element of the sixth aspect.

### Statements

1. A computer-implemented method for generating a local tool utilization function, comprising:
   - obtaining a spatial work model and a spatial tool model, wherein the spatial tool model comprises a spatial representation of an outer boundary of a tool;
   - obtaining a tool trajectory defining a trajectory of the spatial tool model relative to the spatial work model;
   - registering the spatial work model, spatial tool model, and the tool trajectory to the same coordinate system;
   - partitioning the spatial tool model into a plurality of slices so that the spatial representation of the outer boundary of the spatial tool model is partitioned along a longitudinal direction of the spatial tool model;
   - simulating an engagement of the spatial tool model with the spatial work model for at least one step of the tool trajectory; and
   - updating a data structure comprising at least one local tool utilization function characterizes the outer boundary of the spatial tool model for the at least one step of the tool trajectory,
   wherein the local tool utilization function characterizes, for one or more slices of the outer boundary of the spatial representation of the tool, at least one accumulated metric computed and/or measured based on the engagement area of the spatial tool model with the spatial work model during the at least one step of the tool trajectory.
2. The computer-implemented method according to statement 1,
   wherein simulating the engagement area comprises:
      determining a subset of the one or more slices of the spatial tool model that intersect with the spatial work model for the at least one step of the tool trajectory; and
   wherein updating the local tool utilization function characterizing the outer boundary of the spatial tool model comprises:
      updating at least one histogram comprised in the data structure, wherein the histogram comprises a plurality of histogram bins, wherein each histogram bin is associated with a corresponding slice of the spatial tool model for at least one step of the tool trajectory,
      wherein the at least one histogram characterizes, for the one or more slices of the spatial tool model, the at least one accumulated metric dependent on the number of slices of the spatial tool model that engage with the spatial work model for at least one step of the tool trajectory.
3. The computer-implemented method according to one of statements 1 or 2,
   wherein simulating the engagement area of the one or more slices of the spatial tool model with the spatial work model at the at least one step of the tool trajectory further comprises:
   determining that, during the at least one step, an interference of the outer boundary of the at least one slice of the spatial tool model at, or within, an outer boundary of the spatial work model has occurred; and
   designating the at least one slice of the spatial tool model determined to interfere at, or within, the outer boundary of the spatial work model to be an activated slice for the at least one step.
4. The computer-implemented method according to one of statements 1 to 3,
   wherein simulating the engagement area of the one or more slices of the spatial tool model with the spatial work model at the at least one step of the tool trajectory further comprises:
   determining that, during the at least one step of the tool trajectory, an interference of the outer boundary of the at least one slice of the spatial tool model at, or within, an outer boundary of the spatial work model has not occurred; and
   designating the at least one slice of the spatial tool model determined to interfere within the outer boundary of the spatial work model to be an inactive slice for the at least one step.
5. The computer-implemented method according to one of the preceding statements, further comprising:
   - obtaining at least one measurement from a numerical control unit communicably coupled to a machining center during the execution of the at least one step of the tool trajectory; and
   wherein the at least one accumulated metric comprises the at least one measurement.
6. The computer-implemented method according to statement 5,
   wherein the measurement is one, or more, or any combination, of: spindle current, spindle speed, spindle load, tool bending moment, torsion, spindle torque, process force, X servo torque, Y servo torque, Z servo torque, A axis servo torque, B axis servo torque, C servo torque, vibration, noise, engagement time, tool center point path length, a detected event, and/or energy consumption of the machining center.
7. The computer-implemented method according to one of statements 5 or 6, further comprising:
   for each step of an execution of the tool trajectory, providing the at least one accumulated metric by:
   accumulating the value of the measurement amongst each activated slice equally, at the respective at least one step.
8. The computer implemented method according to one of statements 5 or 6, further comprising:
   for each step of an execution of the tool trajectory, providing the at least one accumulated metric by:
      - accumulating the value of the measurement (M(t)) in each activated slice by weighting the measurement according to a simulated material interaction function at each activated slice, at the respective step, wherein the simulated material interaction function is computed using the simulated engagement area, wherein the simulated material interaction function is one, or any combination, of material removal rate, maximum chip thickness, radial depth of cut, or engagement angle; and/or
   accumulating the value of the measurement in each activated slice by weighting the measurement according to a simulated maximum thickness of an undeformed chip at each activated slice, at the respective step, wherein the maximum thickness of an undeformed chip is computed using the simulated engagement area; and/or
   accumulating the value in each activated slice of the measurement into according to a reference distribution, wherein the reference distribution is optionally selected based on a type of measurement performed and/or a type of tool in use at the time of the measurement.
9. The computer-implemented method according to one of statements 5 to 10, further comprising:
   detecting one, or more events during at least one step of the tool trajectory, wherein an event is optionally a detected work entry or a detected work exit condition, and
   accumulating the one or more events into each activated slice to provide the at least one accumulated metric.
10. The computer implemented method according to one of the preceding statements, wherein a tool trajectory is measured during a machining process, and the engagement area is recomputed based on the measured tool trajectory.
11. The computer implemented method according to one of the preceding statements, wherein the tool trajectory is generated based on machining program code.
12. The computer-implemented method according to one of the preceding statements,
   wherein, for at least one step of the tool trajectory, the at least one accumulated metric characterizing the plurality of the activated slices is obtained, at least partially, by simulation, optionally wherein the at least one accumulated metric comprises one, or more, or any combination of the following simulated metrics: cutting angle, depth of cut, width of cut, radial engagement, engagement angle, cutting volume, material removal rate, contact length, maximum thickness of undeformed chip, force, or a zero cutting velocity condition.
13. The computer-implemented method according to statement 12, further comprising:
   for each of the plurality of the activated slices, modelling a wear indicator and/or process force, optionally based on simulated chip thickness, simulated process force, measured process force, a cutting speed of the respective activated slice and/or at least one measurement from the numerical control unit.
14. The computer-implemented method according to statement 12, further comprising:
   for each of the plurality of activated slices, calculating the thickness of an undeformed chip at an engagement exit or entrance of the spatial tool model relative to the spatial work model during engagement with the spatial work model, optionally based on the simulated geometry of an engagement exit of the spatial tool model relative to the spatial work model during engagement with the spatial work model.
15. The computer-implemented method according to one of the preceding statements, further comprising:
   - detecting, based on the at least one accumulated metric, that the slice at a distal end of the spatial tool model has been activated for at least one step of the tool trajectory, and updating the data structure with an event denoting a zero cutting velocity condition related to the at least one step of the tool trajectory.
16. The computer-implemented method according to one of the preceding statements, further comprising:
   - identifying, for the at least one step, or as a function of the tool trajectory, a non-homogeneous engagement condition using the local tool utilization function associated with the spatial representation of the outer boundary of the spatial tool model; and optionally
   - amending the tool trajectory to reduce or to remove the non-homogenous engagement condition; and/or specifying the use of a substitute tool or cutter insert for the tool trajectory.
17. The computer-implemented method according to one of the preceding statements, further comprising:
   - identifying, for the at least one step, or as a function of the tool trajectory, a location of a predetermined load condition relative to the surface of the spatial tool model using the local tool utilization function associated with the spatial representation of the outer boundary of the spatial tool model, and optionally signalling one or more of:
      a command to perform local cleaning of the tool at the location of the predetermined load condition;
      a command to perform local laser-based tool wear measurement at the location of the predetermined load condition;
      a command to perform local vision-based tool wear measurement at the location of the predetermined load condition;
      a command specifying the use of a substitute insert at the location of the predetermined load condition;
      a command to substitute at least one tool; and/or
      a command to change a portion the of a machining trajectory.
18. The computer-implemented method according to one of statements 3 to 17, further comprising:
   - labelling the spatial tool model with locations representing the presence of a predetermined load condition associated with one or more activated slice on the spatial representation of the outer boundary of the spatial tool model; and
   - amending the tool trajectory, or the entire tool trajectory, so that with locations representing the presence of the predetermined load condition associated with activated slices on the spatial representation of the outer boundary of the spatial tool model are not used for subsequent machining.
19. The computer-implemented method according to one of the preceding statements, further comprising:
   - performing, using a tool associated with the spatial tool model, a machining operation on work specified by the tool trajectory;
   - associating the spatial tool model, the tool, and the local tool utilization function with a unique identifier; and
   - storing, in a tool database, the local tool utilization function and the unique identifier of the tool.
20. The computer implemented method according to statement 19, further comprising:
   - loading, from the tool database, a stored local tool utilization function using the unique identifier of the tool or spatial tool model;
   - performing, a virtual and/or a real machining operation on real work or on a further spatial work model, as specified by a further tool trajectory; and
   - in the case of a real machining operation, updating, the stored local tool utilization function associated with the unique identifier, thereby characterizing changes to the tool caused by the real machining operation, or,
   - in the case of a virtual machining operation, updating a copy of the local tool utilization function, wherein the copy of the local tool utilization function is related to a prospective use of the tool associated with the unique identifier on the further spatial work model.
21. A method for training a machine learning model. The method comprises:
   - obtaining a plurality of data structures each comprising a local tool utilization function as computed according one of statements 1 to 20;
   - obtaining one or more process conditions corresponding to the local tool utilization functions, wherein the process conditions are measured and/or simulated;
   - training a machine learning model to predict a tool utilization output of at least one tool using the plurality of data structures and one or more process conditions.
22. A method for providing a tool utilization prediction, comprising:
   - obtaining a machine learning model trained according to statement 21;
   - generating a further local tool utilization function based on a simulation of a prospective machining operation, or by executing a machining operation wherein the further tool utilization function is generated according to the method of the first aspect;
   - obtaining one or more process conditions associated with the simulated or executed machining operation; and
   - providing the further local tool utilization function and the one or more process conditions as inputs to the machine learning model, to thus obtain a tool utilization output.
23. The computer implemented method according to one of statements 1 to 22,
   wherein the accumulated metric is, or comprises, tool load at each step of the tool trajectory.
24. The computer implemented method according to one of the preceding statements, further comprising:
   - outputting, on a graphical user interface, a graphical representation of a tool using the at least one local tool utilization function characterizing the outer boundary of the spatial tool model as computed according to one of the preceding statements.
25. An apparatus, comprising:
   - a communications interface;
   - at least one processor; and
   - a memory;
      wherein the at least one processor is configured to perform the method according to one of statements 1 to 24.
26. A system comprising:
   - the apparatus according to statement 25;
   - a numerical controller; and
   - a machining center communicably coupled to the numerical controller;
      wherein the numerical controller is configured to cause the machining center to perform at least one machining operation on work associated with a spatial work model using a machining tool associated with the tool model according to a tool trajectory provided by the apparatus; and
   wherein the machining center and/or numerical controller are configured to obtain feedback information during the at least one machining operation, and to provide the feedback information to the apparatus.
27. The system of statement 26,
   wherein the feedback information comprises one, or more, of spindle current, spindle load, spindle torque, process force, X servo torque, Y servo torque, Z servo torque, A axis servo torque, B axis servo torque, C servo torque, vibration, noise, engagement time, tool center point path length, and/or energy consumption.
28. A computer program element comprising machine readable instructions which, when executed by a computer, cause the computer to perform the computer implemented method of one of statements 1 to 24.
29. A computer readable medium comprising the computer program element of statement 28.

## Claims

1. A computer-implemented method (100) for generating a local tool utilization function, comprising:
- obtaining (102) a spatial work model (70A-C) and a spatial tool model (72), wherein the spatial tool model comprises a spatial representation of an outer boundary of a tool;
- obtaining (104) a tool trajectory (T1-T3) defining a trajectory of the spatial tool model relative to the spatial work model;
- registering (106) the spatial work model, spatial tool model, and the tool trajectory to the same coordinate system;
- partitioning (108) the spatial tool model into a plurality of slices (S1-S6) so that the spatial representation of the outer boundary of the spatial tool model is partitioned along a longitudinal direction (L) of the spatial tool model;
- simulating (110) an engagement area (49A-C) of the spatial tool model with the spatial work model for at least one step of the tool trajectory; and
- updating (112) a data structure (234) comprising a local tool utilization function (235) characterizing the outer boundary of the spatial tool model for the at least one step of the tool trajectory;
wherein the local tool utilization function characterizes, for one or more slices (S1-S6) of the outer boundary of the spatial representation of the tool, at least one accumulated metric (235) computed and/or measured based on the engagement area of the spatial tool model with the spatial work model during the at least one step of the tool trajectory.

2. The computer-implemented method (100) according to claim 1,
wherein simulating the engagement area (49A-C) comprises:
- determining a subset (S1, S2) of the one or more slices (S1-S6) of the spatial tool model (72) that intersect with the spatial work model for the at least one step of the tool trajectory (T); and
wherein updating the local tool utilization function (235) characterizing the outer boundary of the spatial tool model (72) comprises:
- updating at least one histogram comprised in the data structure (234), wherein the histogram comprises a plurality of histogram bins, wherein each histogram bin is associated with a corresponding slice of the spatial tool model for at least one step of the tool trajectory (T1-T3),
wherein the at least one histogram characterizes, for the one or more slices (S1-S6) of the spatial tool model (72), the at least one accumulated metric (235) dependent on the number of slices of the spatial tool model that engage with the spatial work model for at least one step of the tool trajectory (T).

3. The computer-implemented method (100) according to one of claims 1 or 2,
wherein simulating the engagement area (49A-C) of the one or more slices (S1-S6) of the spatial tool model (72) with the spatial work model (70A-C) at the at least one step of the tool trajectory (T1-T3) further comprises:
- determining that, during the at least one step, an interference of the outer boundary of the at least one slice (S1) of the spatial tool model (72) at, or within, an outer boundary of the spatial work model (70A-C) has occurred; and
- designating the at least one slice of the spatial tool model (72) determined to interfere within the outer boundary of the spatial work model (70A-C) as an activated slice.

4. The computer-implemented method (100) according to one of the preceding claims, further comprising:
- obtaining at least one measurement from a numerical control unit (12) communicably coupled to a machining center (10) during the execution of the at least one step of the tool trajectory (T1-T3); and
wherein the at least one accumulated metric (235) comprises, or is based on, the at least one measurement, optionally wherein the measurement is one, or more, or any combination, of: spindle current, spindle load, spindle torque, process force, tool bending moment, X servo torque, Y servo torque, Z servo torque, A axis servo torque, B axis servo torque, C servo torque, vibration, noise, engagement time, tool center point path length, a detected event, and/or energy consumption of the machining center (10).

5. The computer-implemented method (100) according to claim 4, further comprising:
for each step of an execution of the tool trajectory (T1-T3), providing the at least one accumulated metric (235) by:
accumulating the value of the measurement (M(t)) in each activated slice equally, at the respective at least one step.

6. The computer implemented method (100) according to claims 4 or 5, further comprising:
for each step of an execution of the tool trajectory (T1-T3), providing the at least one accumulated metric (235) by:
- accumulating the value of the measurement (M(t)) in each activated slice by weighting the measurement according to a simulated material interaction function at each activated slice, at the respective step, wherein the simulated material interaction function is computed using the simulated engagement area, wherein the simulated material interaction function is one, or any combination, of material removal rate, maximum chip thickness, radial depth of cut, or engagement angle; and/or
- accumulating the value in each activated slice of the measurement according to a reference distribution (D(SN,t)), wherein the reference distribution is optionally selected based on a type of measurement performed and/or a type of tool in use at the time of the measurement.

7. The computer-implemented method (100) according to one of the preceding claims,
wherein, for at least one step of the tool trajectory (T1-T3), the at least one accumulated metric (235) characterizing the plurality of the activated slices is obtained, at least partially, by simulation, optionally wherein the at least one accumulated metric comprises one, or more, or any combination of the following simulated metrics: cutting angle, material removal rate, depth of cut, width of cut, radial engagement, engagement angle, cutting volume, contact length, maximum thickness of undeformed chip, force, or a zero cutting velocity condition (96).

8. The computer-implemented method (100) according to one of the preceding claims, further comprising:
- identifying, for the at least one step, or as a function of the tool trajectory (T1-T3), a location of a predetermined load condition relative to the surface of the spatial tool model (72) using the local tool utilization function associated with the spatial representation of the outer boundary of the spatial tool model, and optionally:
- signalling one or more of:
a command to perform local cleaning of the tool at the location of the predetermined load condition;
a command to perform local laser-based tool wear measurement at the location of the predetermined load condition;
a command to perform local vision-based tool wear measurement at the location of the predetermined load condition;
a command specifying the use of a substitute insert at the location of the predetermined load condition,
a command to substitute at least one tool and/or
a command to change a portion of a machining trajectory.

9. The computer-implemented method (100) according to one of the preceding claims, further comprising:
- performing, using a tool associated with the spatial tool model (72), a machining operation on work specified by the tool trajectory;
- associating the spatial tool model, the tool, and the local tool utilization function with a unique identifier; and
- storing, in a tool database (170), the local tool utilization function and the unique identifier of the tool.

10. The computer implemented method (100) according to claim 9, further comprising:
- loading, from the tool database, a stored local tool utilization function using the unique identifier of the tool or spatial tool model;
- performing a virtual and/or a real machining operation on real work or on a further spatial work model, as specified by a further tool trajectory; and
- in the case of a real machining operation, updating the stored local tool utilization function associated with the unique identifier, thereby characterizing changes to the tool caused by the real machining operation, or,
- in the case of a virtual machining operation, updating a copy of the local tool utilization function, wherein the copy of the local tool utilization function is related to a prospective use of the tool associated with the unique identifier on the further spatial work model.

11. A method (210) for training a machine learning model, comprising:
- obtaining (212) a plurality of data structures each comprising a local tool utilization function as computed according to one of claims 1 to 10;
- obtaining (214) one or more process conditions corresponding to the local tool utilization functions, wherein the process conditions are measured and/or simulated;
- training (216) a machine learning model to predict a tool utilization output of at least one tool using the plurality of data structures and one or more process conditions.

12. A method (211) for providing a tool utilization prediction, comprising:
- obtaining (218) a machine learning model trained according to the second aspect;
- generating (220) a further local tool utilization function based on a simulation of a prospective machining operation, or by executing a machining operation wherein the further tool utilization function is generated according to one of claims 1 to 10;
- obtaining (222) one or more process conditions associated with the simulated or executed machining operation; and
- providing (224) the further local tool utilization function and the one or more process conditions as inputs to the machine learning model, to thus obtain a tool utilization output.

13. An apparatus (150), comprising:
- a communications interface (156);
- at least one processor (154); and
- a memory (152);
wherein the at least one processor (154) is configured to perform the method according to claims 1 to 10.

14. A system (160) comprising:
- the apparatus (150) according to claim 13;
- a numerical controller (12); and
- a machining center (10) communicably coupled to the numerical controller (12);
wherein the numerical controller (12) is configured to cause the machining center (10) to perform at least one machining operation on work (46) associated with a spatial work model using a machining tool associated with the tool model according to a tool trajectory provided by the apparatus; and
wherein the machining center (10) and/or numerical controller (12) are configured to obtain feedback information during the at least one machining operation, and to provide the feedback information to the apparatus.

15. A computer program element comprising machine readable instructions which, when executed by a computer, cause the computer to perform the computer implemented method of one of claims 1 to 12.

## Amended claims

### Amended claims in accordance with Rule 137(2) EPC.

1. A computer-implemented method (100) for generating a local tool utilization function, comprising:
- obtaining (102) a spatial work model (70A-C) and a spatial tool model (72), wherein the spatial tool model comprises a spatial representation of an outer boundary of a tool;
- obtaining (104) a tool trajectory (T1-T3) defining a trajectory of the spatial tool model relative to the spatial work model;
- registering (106) the spatial work model, spatial tool model, and the tool trajectory to the same coordinate system;
- partitioning (108) the spatial tool model into a plurality of slices (S1-S6) so that the spatial representation of the outer boundary of the spatial tool model is partitioned along a longitudinal direction (L) of the spatial tool model;
- simulating (110) an engagement area (49A-C) of the spatial tool model with the spatial work model for at least one step of the tool trajectory; and
- updating (112) a data structure (234) comprising a local tool utilization function (235) characterizing the outer boundary of the spatial tool model for the at least one step of the tool trajectory;
wherein the local tool utilization function characterizes, for one or more slices (S1-S6) of the outer boundary of the spatial representation of the tool, at least one accumulated metric (235) computed and/or measured based on the engagement area of the spatial tool model with the spatial work model during the at least one step of the tool trajectory.

2. The computer-implemented method (100) according to claim 1,
wherein simulating the engagement area (49A-C) comprises:
- determining a subset (S1, S2) of the one or more slices (S1-S6) of the spatial tool model (72) that intersect with the spatial work model for the at least one step of the tool trajectory (T); and
wherein updating the local tool utilization function (235) characterizing the outer boundary of the spatial tool model (72) comprises:
- updating at least one histogram comprised in the data structure (234),
wherein the histogram comprises a plurality of histogram bins, wherein each histogram bin is associated with a corresponding slice of the spatial tool model for at least one step of the tool trajectory (T1-T3),
wherein the at least one histogram characterizes, for the one or more slices (S1-S6) of the spatial tool model (72), the at least one accumulated metric (235) dependent on the number of slices of the spatial tool model that engage with the spatial work model for at least one step of the tool trajectory (T).

3. The computer-implemented method (100) according to one of claims 1 or 2, wherein simulating the engagement area (49A-C) of the one or more slices (S1-S6) of the spatial tool model (72) with the spatial work model (70A-C) at the at least one step of the tool trajectory (T1-T3) further comprises:
- determining that, during the at least one step, an interference of the outer boundary of the at least one slice (S1) of the spatial tool model (72) at, or within, an outer boundary of the spatial work model (70A-C) has occurred; and
- designating the at least one slice of the spatial tool model (72) determined to interfere within the outer boundary of the spatial work model (70A-C) as an activated slice.

4. The computer-implemented method (100) according to one of the preceding claims, further comprising:
- obtaining at least one measurement from a numerical control unit (12) communicably coupled to a machining center (10) during the execution of the at least one step of the tool trajectory (T1-T3); and
wherein the at least one accumulated metric (235) comprises, or is based on, the at least one measurement, optionally wherein the measurement is one, or more, or any combination, of: spindle current, spindle load, spindle torque, process force, tool bending moment, X servo torque, Y servo torque, Z servo torque, A axis servo torque, B axis servo torque, C servo torque, vibration, noise, engagement time, tool center point path length, a detected event, and/or energy consumption of the machining center (10).

5. The computer-implemented method (100) according to claim 4, when depending from claim 3, further comprising:
for each step of an execution of the tool trajectory (T1-T3), providing the at least one accumulated metric (235) by:
accumulating the value of the measurement (M(t)) in each activated slice equally, at the respective at least one step.

6. The computer implemented method (100) according to claim 4, when depending from claim 3 or claim 5, further comprising:
for each step of an execution of the tool trajectory (T1-T3), providing the at least one accumulated metric (235) by:
- accumulating the value of the measurement (M(t)) in each activated slice by weighting the measurement according to a simulated material interaction function at each activated slice, at the respective step, wherein the simulated material interaction function is computed using the simulated engagement area, wherein the simulated material interaction function is one, or any combination, of material removal rate, maximum chip thickness, radial depth of cut, or engagement angle; and/or
- accumulating the value in each activated slice of the measurement according to a reference distribution (D(SN,t)), wherein the reference distribution is optionally selected based on a type of measurement performed and/or a type of tool in use at the time of the measurement.

7. The computer-implemented method (100) according to one of claims 3 to 6,
wherein, for at least one step of the tool trajectory (T1-T3), the at least one accumulated metric (235) characterizing the plurality of the activated slices is obtained, at least partially, by simulation, optionally wherein the at least one accumulated metric comprises one, or more, or any combination of the following simulated metrics: cutting angle, material removal rate, depth of cut, width of cut, radial engagement, engagement angle, cutting volume, contact length, maximum thickness of undeformed chip, force, or a zero cutting velocity condition (96).

8. The computer-implemented method (100) according to one of the preceding claims, further comprising:
- identifying, for the at least one step, or as a function of the tool trajectory (T1-T3), a location of a predetermined load condition relative to the surface of the spatial tool model (72) using the local tool utilization function associated with the spatial representation of the outer boundary of the spatial tool model, and optionally:
- signalling one or more of:
a command to perform local cleaning of the tool at the location of the predetermined load condition;
a command to perform local laser-based tool wear measurement at the location of the predetermined load condition;
a command to perform local vision-based tool wear measurement at the location of the predetermined load condition;
a command specifying the use of a substitute insert at the location of the predetermined load condition,
a command to substitute at least one tool and/or
a command to change a portion of a machining trajectory.

9. The computer-implemented method (100) according to one of the preceding claims, further comprising:
- performing, using a tool associated with the spatial tool model (72), a machining operation on work specified by the tool trajectory;
- associating the spatial tool model, the tool, and the local tool utilization function with a unique identifier; and
- storing, in a tool database (170), the local tool utilization function and the unique identifier of the tool.

10. The computer implemented method (100) according to claim 9, further comprising:
- loading, from the tool database, a stored local tool utilization function using the unique identifier of the tool or spatial tool model;
- performing a virtual and/or a real machining operation on real work or on a further spatial work model, as specified by a further tool trajectory; and
- in the case of a real machining operation, updating the stored local tool utilization function associated with the unique identifier, thereby characterizing changes to the tool caused by the real machining operation, or,
- in the case of a virtual machining operation, updating a copy of the local tool utilization function, wherein the copy of the local tool utilization function is related to a prospective use of the tool associated with the unique identifier on the further spatial work model.

11. A method (210) for training a machine learning model, comprising:
- obtaining (212) a plurality of data structures each comprising a local tool utilization function as computed according to one of claims 1 to 10;
- obtaining (214) one or more process conditions corresponding to the local tool utilization functions, wherein the process conditions are measured and/or simulated;
- training (216) a machine learning model to predict a tool utilization output of at least one tool using the plurality of data structures and one or more process conditions.

12. A method (211) for providing a tool utilization prediction, comprising:
- obtaining (218) a machine learning model trained according to the method of claim 11;
- generating (220) a further local tool utilization function based on a simulation of a prospective machining operation, or by executing a machining operation wherein the further tool utilization function is generated according to one of claims 1 to 10;
- obtaining (222) one or more process conditions associated with the simulated or executed machining operation; and
- providing (224) the further local tool utilization function and the one or more process conditions as inputs to the machine learning model, to thus obtain a tool utilization output.

13. An apparatus (150), comprising:
- a communications interface (156);
- at least one processor (154); and
- a memory (152);
wherein the at least one processor (154) is configured to perform the method according to claims 1 to 10.

14. A system (160) comprising:
- the apparatus (150) according to claim 13;
- a numerical controller (12); and
- a machining center (10) communicably coupled to the numerical controller (12);
wherein the numerical controller (12) is configured to cause the machining center (10) to perform at least one machining operation on work (46) associated with a spatial work model using a machining tool associated with the tool model according to a tool trajectory provided by the apparatus; and
wherein the machining center (10) and/or numerical controller (12) are configured to obtain feedback information during the at least one machining operation, and to provide the feedback information to the apparatus.

15. A computer program element comprising machine readable instructions which, when executed by a computer, cause the computer to perform the computer implemented method of one of claims 1 to 12.
